# EUROPÄISCHE PATENTSCHRIFT

(11) **EP 4 188 671 B1**
(45) Veröffentlichungstag und Bekanntmachung des Hinweises auf die Patenterteilung: **29.01.2025**
(21) Anmeldenummer: 21743397.8
(22) Anmeldetag: 07.07.2021
(51) Int. Cl.: B29C 45/17, B65B 5/10, B65B 23/22, B65B 5/06, B65B 35/36, B65B 35/56

(54) **VERPACKUNGSVERFAHREN FÜR PIPETTENSPITZEN ODER MEDIZINISCHE REAKTIONSGEFÄSSE, VERPACKUNGSVORRICHTUNG SOWIE SPRITZGUSSSYSTEM**
PACKAGING METHOD FOR PIPETTE TIPS OR MEDICAL REACTION VESSELS, PACKAGING APPARATUS, AND INJECTION-MOULDING SYSTEM
PROCÉDÉ D'EMBALLAGE POUR POINTES DE PIPETTE OU RÉCIPIENTS MÉDICAUX À RÉACTION, APPAREIL D'EMBALLAGE ET SYSTÈME DE MOULAGE PAR INJECTION

(30) Priorität: 30.07.2020 DE 102020120165
(43) Veröffentlichungstag der Anmeldung: 07.06.2023
(73) Patentinhaber: Waldorf Technik GmbH, 78234 Engen (DE)
(72) Erfinder: FUHRMANN, Ralf, 78250 Tengen/Weil (DE); BOOS, Christian, 79194 Gundelfingen (DE)
(74) Vertreter: Patent- und Rechtsanwälte Behrmann Wagner PartG mbB
(86) Internationale Anmeldenummer: PCT/EP2021/068740
(87) Internationale Veröffentlichungsnummer: WO 2022/022955

(56) Entgegenhaltungen:
- EP-A1- 2 780 144
- EP-A1- 3 424 670
- CN-A- 110 745 282
- DE-A1- 102013 110 948
- US-A1- 2019 047 196

## Beschreibung

Die Erfindung betrifft ein Verpackungsverfahren gemäß dem Oberbegriff des Anspruchs 1 zum Verpacken von als Pipettenspitzen oder medizinische Reaktionsgefäße ausgebildeten Kunststoffspritzgussteilen in Endverpackungseinheiten, umfassend die Schritte: mehrfaches, jeweils gleichzeitiges Entnehmen eines Schusses von K Spritzgussteilen aus K Kavitäten, wobei die K Kavitäten, bevorzugt gleichmäßig, auf C Cluster (geometrische Kavitätenanordnungen) verteilt angeordnet sind, gleichmäßiges und kavitätenreines Verteilen der K Kunststoffspritzgussteile auf U kavitätenreine Untergruppen in einer Ablageebene (Übergabeebene), bis jede Untergruppe L Kunststoffspritzgussteile aufweist, wobei die Anzahl L der Kunststoffspritzgussteile einer Untergruppe der Anzahl A der in einer Endverpackungseinheit maximal aufnehmbaren Kunststoffspritzgussteile oder einem ganzlagigen Teiler von A entspricht, kavitätenreines oder kavitätensortiertes Auffüllen mehrerer Endverpackungseinheiten mit den Untergruppen, bis die Endverpackungseinheiten jeweils A Kunststoffspritzgussteile aufweisen, wobei die Ablageebene entweder unmittelbar von den Endverpackungen oder von einem statischen oder verstellbaren, bevorzugt horizontalen, Zwischenspeicher gebildet wird und die Untergruppen aus dem Zwischenspeicher in die Endverpackungseinheiten überführt werden.

Ferner betrifft die Erfindung eine Verpackungsvorrichtung gemäß dem Oberbegriff des Anspruchs 11 zum Zusammenwirken mit einer benachbart zur Verpackungsvorrichtung anordenbaren Spritzgussvorrichtung, deren Spritzgusswerkzeuge ausgebildet sind zum Herstellen von Pipettenspitzen oder medizinischen Reaktionsgefäßen.

Darüber hinaus betrifft die Erfindung ein Spritzgusssystem gemäß Anspruch 14, umfassend eine Spritzgussvorrichtung sowie eine Verpackungsvorrichtung.

Bei bekannten Verpackungsverfahren zum Verpacken von als Pipettenspitzen oder medizinische Reaktionsgefäße, insbesondere zur Blutanalyse, ausgebildeten Kunststoffspritzgussteilen werden gleichzeitig K Kunststoffspritzgussteile aus K Kavitäten einer Spritzgussvorrichtung entnommen und als Schüttgut zwischengespeichert. Aus dieser Schüttung werden dann Endverpackungseinheiten jeweils mit A Kunststoffspritzgussteilen beladen. Nachteilig bei dem bekannten Verfahren ist, dass keine Zuordnung der abgepackten Kunststoffspritzgussteile zu bestimmten Kavitäten möglich ist. Es ist also nicht mehr nachvollziehbar, aus welcher Kavität bzw. aus welchen Kavitäten die Kunststoffspritzgussteile einer bestimmten Endverpackungseinheit stammen. Dies führt bei nur einem einzigen fehlerhaften Kunststoffspritzgussteil in einer Endverpackungseinheit dazu, dass die gesamte Produktion zurückgerufen werden muss und nicht nur die mit Kunststoffspritzgussteilen aus einer bestimmten Kavität bzw. aus bestimmten Kavitäten bestückten Endverpackungseinheiten.

Revolutioniert wurde die Verpackung von als Pipettenspitzen oder medizinische Reaktionsgefäße ausgebildeten Kunststoffspritzgussteilen durch die in der EP 2 323 930 B1 (WO 2011/003507 A1) beschriebenen Erfindung. Diese schlägt vor, dass die gleichzeitig aus den K Kavitäten mittels eines Entnahmegreifers entnommenen K Kunststoffspritzgussteile gleichzeitig auf U Untergruppen verteilt in einem Zwischenspeicher abgelegt werden und dass mehrfach und solange K Kunststoffspritze aus den K Kavitäten entnommen und gleichzeitig auf die U Untergruppen in dem Zwischenspeicher, d.h. vor dem Überführen in die Endverpackungen verteilt werden, bis jede Untergruppe L Kunststoffspritzgussteile aufweist, wobei die Anzahl L der Kunststoffspritzgussteile einer Untergruppe der Anzahl A von in einer Endverpackungseinheit maximal zu ladenden Kunststoffspritzgussteilen oder einem ganzzahligen Teiler von A entspricht. Daraufhin werden die Endverpackungseinheiten jeweils mit einer einzigen Untergruppe, also kavitätenrein befüllt oder mit mehreren dieser Untergruppen, also kavitätensortiert.

Die in der EP 2 801 531 B1 der Anmelderin beschriebene Erfindung bildet das vorgenannte Verfahren weiter, indem sie ermöglicht, auf einen Zwischenspeicher zu verzichten und die Ablageebene, in der die kavitätenreinen Untergruppen gebildet werden, unmittelbar von den Endverpackungseinheiten bereitgestellt wird.

Bei der in der EP 2 868 587 B1 der Anmelderin beschriebenen Erfindung werden die kavitätenreinen Untergruppen auf einem Tisch einer Wechseltischanordnung gebildet und daraufhin durch Verdrehen der Wechseltischanordnung um eine Horizontalachse in vertikaler Richtung verstellt, um den zur Verfügung stehenden Raum optimal auszunutzen.

Aus der EP 2 801 532 B1 der Anmelderin ist ein weiteres, optimiertes Verfahren zum kavitätenreinen oder kavitätensortierten Verpacken von Pipettenspitzen und medizinischen Reaktionsgefäßen bekannt, bei welchem jeweils ein einziger Schuss von Kunststoffspritzgussteilen vor der Bildung von kavitätenreinen Untergruppen in einem Zwischenpuffer zwischengepuffert wird, um hierdurch die Zykluszeit zu verkürzen.

Aus der DE10 2017 118 527 A1 der Anmelderin ist eine weiter optimierte Verfahrensverpackung von Pipettenspitzen bekannt, dass das aus der EP 2 323930 B1 der Anmelderin bekannte Grund- bzw. Basisverfahren dahingehend optimiert, dass vor der Anordnung der Kunststoffspritzgussteile in kavitätenreinen Untergruppen eine Linienbildung der Spritzgussteile eines jeweiligen Schusses erfolgt. Die linienförmig angeordneten Kunststoffspritzgussteile eines Schusses werden dann unmittelbar in kavitätenreinen Untergruppen angeordnet.

Sämtliche vorgenannten Verpackungsverfahren mit zugehörigen Verpackungsvorrichtungen der Anmelderin für als Pipettenspitzen oder medizinische Reaktionsgefäße ausgebildeten Kunststoffspritzgussteilen haben sich bewährt und gewährleisten seither eine optimierte Nachverfolgbarkeit von Produkten. Auch wurden durch die beschriebenen Erfindungen die Zykluszeiten verbessert. Es bestehen aktuell jedoch Bestrebungen, die Zykluszeiten zum Verpacken von als Pipettenspitzen oder medizinische Reaktionsgefäße ausgebildeten Kunststoffspritzgussteilen noch weiter zu verkürzen, ohne auf eine kavitätenreine oder kavitätensortierte Verpackung dieser Kunststoffspritzgussteile in den Endverpackungen zu verzichten. Hierbei erweist es sich als problematisch, dass bisher sämtliche Kunststoffspritzgussteile eines Schusses mittels einer filigranen Verstellmechanik voneinander beanstandet werden, also auf das Rastermaß der Endverpackungen gebracht werden, um gleichzeitig (und damit zykluszeitoptimiert) in der Ablageebene in die jeweils zugehörige Untergruppe abgelegt zu werden. Diese filigranen Verstellmechaniken, mit denen sämtliche Kunststoffspritzgussteile eines jeden Schusses relativ zueinander entlang von zwei senkrechtzueinander verlaufenden Achsen auseinander gezogen werden, sind konstruktionsbedingt wenig biegesteif, wodurch Verstellgeschwindigkeiten begrenzt sind und eine weitere Optimierung der Zykluszeit an physikalische Grenzen stößt.

Neben den entnahmegreiferbasierten, von der Anmelderin aus mehrehren Gründen favorisierten Verpackungsverfahren sind aus der Praxis schlauchbasierte Lösungen bekannt. Hierzu werden die Kunststoffspritzgussteile über Schläuche zu den Endverpackungseinheiten gefördert. Nachteilig hierbei ist, dass die Anzahl A von in einer Verpackungseinheit zu befördernden Kunststoffspritzgussteilen der Anzahl K Kavitäten entsprechen muss oder dass die Anzahl A von in einer Endverpackungseinheit zu überführenden Kunststoffspritzgussteilen ein ganzzahliges Vielfaches der Anzahl der Kavitäten sein muss. Die Flexibilität bekannter Verfahren und Vorrichtungen ist damit begrenzt. Zudem ist nachteilig, dass derartige Anlagen einen enormen Raumbedarf für das notwendige Schlauchpaket aufweisen und mechanisch anfällig sind und somit zu erhöhten Ausfallzeiten führen. Zudem zeichnen sich die Anlagen durch eine vergleichsweise langsame Zykluszeit aus.

Die EP 3 052 388 B1 beschreibt ein Verpackungsverfahren, bei dem die Anordnung der Kunststoffspritzgussteile durch eine Zweifach-Ablage eines Schusses erfolgt, wodurch Linien gebildet werden. Die Zweifach-Ablage geht auf Kosten der Zykluszeit. Zudem erfolgt keine kavitätenreine Untergruppenbildung.

Ausgehend von dem vorgenannten Stand der Technik, liegt der Erfindung die Aufgabe zugrunde, ein Verfahren sowie eine Vorrichtung zum Verpacken von Pipettenspitzen und medizinischen Reaktionsgefäßen anzugeben, welches sich bei Gewährleistung einer kavitätenreinen oder kavitätensortieren Verpackung dieser Teile dadurch auszeichnet, dass dieses/diese eine Reduzierung von Zykluszeiten ermöglicht. Weiterhin besteht die Aufgabe darin, ein Spritzgusssystem mit einer derart verbesserten Spritzgussvorrichtung anzugeben.

Diese Aufgabe wird hinsichtlich des Verfahrens mit den Merkmalen des Patentanspruchs 1, hinsichtlich der Vorrichtung mit den Merkmalen des Patentanspruchs 11 sowie im Hinblick auf das Spritzgusssystem mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, in Abgrenzung zu der bisherigen Vorgehensweise nicht jeden Schuss von K Kunststoffspritzgussteilen für sich in die Untergruppen zu überführen, sondern zunächst eine der Anzahl der Kavitäten entsprechende Anzahl von kavitätenreinen Unter-Untergruppen zu bilden, die jeweils mehrere, insbesondere drei bis fünf, Kunststoffspritzgussteile aus derselben Kavität aufnehmen. Anders ausgedrückt wird erfindungsgemäß vor der kavitätenreinen Untergruppenbildung für jede Kavität eine kavitätenreine Unter-Untergruppe mit mehreren Kunststoffspritzgussteilen aus jeweils derselben Kavität geschaffen, wobei die Untergruppen dann Schritt für Schritt mit kavitätenreinen Unter-Untergruppen, alle beinhaltend Kunststoffspritzgussteile aus derselben Kavität, in der Ablageebene befüllt bzw. gebildet werden. Jede Untergruppe enthält also in jedem Fall mehrere kavitätenreine Unter-Untergruppen. Im Gegensatz zu der bisherigen Vorgehensweise, bei welcher alle Kunststoffspritzgussteile jedes Schusses für sich genommen relativ zueinander entlang von zwei senkrecht zueinander verlaufenden Achsen verstellt werden mussten, was eine filigrane und nicht biegesteife Mechanik erfordert hat, ermöglicht das erfindungsgemäße Vorgehen ein Verstellen von Flächen, d.h. von bereits zuvor zu kavitätenreinen Unter-Untergruppen gruppierten Kunststoffspritzgussteilen. Hierdurch ist es möglich, wesentlich robustere Verstellmittel zum Verstellen entlang der zwei senkrecht zueinander verlaufenden Achsen einzusetzen als dies bisher der Fall war. Ganz besonders bevorzugt erfolgt das Verstellen der Unter-Untergruppen entlang der zwei senkrecht zueinander verlaufenden Achsen, wie später noch erläutert werden wird auf zwei unterschiedlichen Verstelleinheiten, die jeweils nur eine einzige translatorische Verstellbewegung der Unter-Untergruppen entlang einer der Achsen voneinander weg bewirken.

Grundsätzlich ist es möglich, sämtliche Unter-Untergruppen relativ zueinander entlang der zwei senkrecht zueinander verlaufenden Achsen zu verstellen. Im Hinblick auf die Realisierung von besonders robusten Mechaniken ist es jedoch besonders zweckmäßig ist es, wenn gemäß einer besonders bevorzugten Ausführungsform nicht sämtliche Unter-Untergruppen bei der Verstellbewegung entlang der zwei senkrecht zueinander verlaufenden Achsen relativ zueinander verstellt werden sondern, besonders bevorzugt gleich große, Gruppen von kavitätenreinen Untergruppen, wobei bevorzugt die Unter-Untergruppen innerhalb der Gruppen während der Verstellung entlang der zwei Achsen ortsfest relativ zueinander bleiben. Ganz besonders bevorzugt sind diese Gruppen von kavitätenreinen Unter-Untergruppen dabei clusterrein, umfassen also nur Unter-Untergruppen, die gebildet sind bzw. wurden/werden durch Kunststoffspritzgussteile, die Ausschließlich aus Kavitäten desselben Clusters stammen. Noch weiter bevorzugt ist es, wenn jede der Gruppen sämtliche Unter-Untergruppen eines jeweiligen Clusters aufweist, also jeweils sämtliche Unter-Untergruppen, die aus Kunststoffspritzgussteilen aus den Kavitäten eines jeweiligen Clusters entstammen.

Im Ergebnis werden also dann lediglich Gruppen von Unter-Untergruppen entlang der zwei Achsen translatorisch relativ zueinander verstellt, während bevorzugt die Anordnung der Unter-Untergruppen in der jeweiligen Gruppe untereinander gleich bleibt. Hierdurch kann mit besonders robusten Verstellmechanismen gearbeitet werden, da bei jeder der translatorischen nicht eine Vielzahl von Einzelteilen relativ zueinander bewegt werden müssen sondern ganze Gruppen. Sind die Gruppen beispielsweise in zwei parallelen Linien angeordnet, muss bei einer der translatorischen Verstellbewegungen entlang einer der Achsen nur die eine Hälfte der Gruppen relativ zu der anderen Hälfte der Gruppen verstellt werden, wobei die Gruppen jeder Hälfte ortsfest relativ zueinander angeordnet bleiben können. Bei mehr als zwei parallelen Linien von Gruppen muss, bevorzugt gleichzeitig, ein der Anzahl der Linien entsprechender Anteil an Gruppen gleichzeitig relativ zueinander verstellt werden. Bei der weiteren (zweiten) Verstellbewegung entlang der anderen bzw. weiteren (senkrecht zu der vorgenannten Achse orientierten) Achse müssen dann die Gruppen entlang der Linien auseinander gezogen bzw. verschoben werden, d.h. relativ zueinander verstellt werden, wobei die jeweils benachbart (also senkrecht zur Linienerstreckung) in der anderen Linie angeordnete Gruppe bzw. in benachbarten Linien (also senkrecht zur Linienerstreckung) angeordneten Gruppen von Unter-Untergruppen gemeinsam entlang der Längserstreckung der Linien verstellt werden können, ohne deren Relativposition (senkrecht zur Linienerstreckung) zueinander zu verändern. Selbstverständlich kann die Reihenfolge der axialen Verstellbewegungen auch vertauscht werden.

Die Verstellung von, bevorzugt clusterreinen, Gruppen relativ zueinander entlang der zwei senkrecht zueinander verlaufenden Achsen ist die bevorzugte Verfahrens-Variante. Dabei ist es möglich, die Unter-Untergruppen jeder Gruppe nach der Unter-Untergruppenbildung ortsfest zueinander positioniert zu lassen, also deren Relativposition in der Gruppe nach Bildung (Fertigstellung) der Unter-Untergruppen nicht mehr zu verändern. Denkbar ist eine alternative Verfahrensvariante, bei der die Unter-Untergruppen vor der Verstellung der Gruppen relativ zueinander entlang der zwei senkrecht zueinander verlaufenden Achsen, oder nach der Verstellung der Gruppen oder als Zwischenschritte zwischen den Verstellungen der Gruppen entlang der zwei Achsen relativ zueinander zu verstellen, insbesondere entlang einer in der Unter-Untergruppen-Anordnungsebene liegenden Achse oder entlang von zwei senkrecht zueinander verlaufenden, in der Unter-Untergruppen-Anordnungsebene liegenden Achsen, um den Abstand der Unter-Untergruppen zueinander in einer oder in zwei Richtungen innerhalb der jeweiligen Gruppe zu vergrößern.

Ganz bevorzugt ist es die Gruppen in mindestens einer Reihe/Linie, bevorzugt in mehreren parallelen Linien anzuordnen, wobei es besonders bevorzugt ist, wenn die geometrische Anordnung bzw. Reihenfolge, besonders bevorzugt matrixartige Anordnung der Gruppen der Anordnung der Cluster entspricht.

Im Ergebnis ist es also vorteilhaft, wenn eine Vielzahl von Kunststoffspritzgussteilen in Unter-Untergruppen und diese wieder in Gruppen zusammengefasst, die gemeinsam verstellt werden, ohne deren Relativposition in der Gruppe zu ändern.

Ein weiterer wesentlicher Vorteil der Erfindung besteht darin, dass die Kunststoffspritzgussteile in der jeweiligen Unter-Untergruppe bereits so relativ zueinander, insbesondere entlang einer Linie, positioniert werden, dass der Abstand von unmittelbar benachbarten dieser Kunststoffspritzgussteile in der jeweiligen Unter-Untergruppe bereits dem Abstand dieser Kunststoffspritzgussteile in der Endverpackung entspricht, der während des gesamten Verpackungsprozesses nach Bildung der Unter-Untergruppen nicht mehr verändert werden muss und bevorzugt auch nicht mehr verändert wird, um jeweils eine gleichzeitige Überführung einer ganzen Unter-Untergruppe zu ermöglichen.

Die Untergruppen werden mit kavitätenreinen Unter-Untergruppen solange befüllt, bis jede kavitätenreine Untergruppe die gewünschten L Kunststoffspritzgussteile aufweist. Jede Endverpackung wird entweder kavitätenrein befüllt, enthält am Ende des Verpackungsprozesses also eine einzige kavitätenreine Untergruppe, die wiederum ausschließlich kavitätenreine Unter-Untergruppen enthält, deren Kunststoffspritzgussteile aus derselben Kavität stammen, oder die Endverpackungen werden kavitätensortiert befüllt, erhalten also mehrere (nicht sämtliche) für sich jeweils kavitätenreine Untergruppen, sodass auch hier die Zuordnung von Kavitäten zu bestimmten Endverpackungen möglich ist.

Jedes Mal, wenn die Unter-Untergruppen eine gewünschte Teileanzahl an Kunststoffspritzgussteilen aufweisen, werden diese in die Untergruppen überführt. Dabei ist es denkbar, dass die Unter-Untergruppen bei jedem Befüllzyklus immer mit dergleichen Anzahl an Kunststoffspritzgussteilen befüllt werden - dann entspricht die Anzahl der Kunststoffspritzgussteile jeder Unter-Untergruppe einem ganzzahligen Teiler der Spritzgussteile der zugehörigen Untergruppe. Es ist jedoch, insbesondere bei einer gewünschten ungeraden Anzahl von Spritzgussteilen pro Untergruppe möglich, die Anzahl der Spritzgussteile pro Unter-Untergruppe so zu variieren, dass durch Mehrfachzusammenfassen von Unter-Untergruppen eine Untergruppe mit der gewünschten Anzahl von Spritzgussteilen entsteht. So bleibt beispielsweise die Anzahl von in eine Unter-Untergruppe zu überführenden Spritzgussteilen über mehrere Zyklen gleich und weicht in mindestens einem, vorzugsweise ausschließlich einem Zyklus zur Befüllung einer Untergruppe im Hinblick auf die Kunststoffteilezahl ab. Soll eine Untergruppe beispielsweise fünfzehn Teile erhalten, ist es denkbar, diese durch Ablage von drei Untergruppen mit jeweils vier Spritzgussteilen aus derselben Kavität und mit einer Unter-Untergruppe mit drei Spritzgussteilen aus dieser Kavität zu bestücken. Falls es die Abstände hergeben, ist es alternativ denkbar, Unter-Untergruppen mit jeweils fünf Kunststoffspritzgussteilen aus derselben Kavität zu bilden und drei davon nacheinander zum Befüllen der Untergruppe zu nutzen.

Wesentlich ist, dass es sich bei den in Rede stehenden Verpackungseinheiten bzw. Endverpackungseinheiten, in denen entweder die Untergruppen gebildet werden oder die nach vorhergehender Bildung der Untergruppen in einem Zwischenspeicher jeweils mit einer einzigen oder mehreren (nicht sämtlichen) kavitätenreinen Untergruppen befüllt werden, um Endverpackungseinheiten handelt, die nach der vollständigen Befüllung zu Endkunden ausgeliefert werden, wobei es sich bei dem Auslieferungsschritt an den Endkunden bzw. die Übergabe an eine Spedition od. dgl. Transporteinheit um einen weiterbildungsgemäßen Verfahrensschritt handelt, der hiermit als beanspruchbar offenbart gelten soll.

Bevorzugt sind die Endverpackungen dabei so dimensioniert, dass sie entweder 32, 48, 60, 84, 96, 105 oder 120 Kunststoffspritzgussteile beinhalten, wobei die Endverpackungsgrößen hierauf nicht beschränkt sind. Bevorzugt werden die Endverpackungseinheiten zu den Endkunden in Umverpackungen geliefert, wobei entweder die Endverpackungen einzeln, d.h. jeweils mit einer Umverpackung versehen werden oder alternativ mehrere Endverpackungen kopiert und gemeinsam mit einer Umverpackung, beispielsweise einem Umkarton oder einer Folienverpackung versehen werden. Bei den zum Einsatz kommenden Endverpackungen handelt es sich ausdrücklich nicht um Werkstückträger zur Zwischenlagerung, aus denen heraus dann in einem zeitlich späteren gelagerten Schritt, insbesondere nach einer Lagerzeit in einem Zwischenlager, Endverpackungen verpackt werden. Auch handelt es sich nicht um innerhalb einer Verpackungsvorrichtung rotierende bzw. in dieser verbleibende Zwischenspeicher, wie die in der EP 2 323 930 B1 beschriebenen Zwischenspeicher, aus welchen dann erst die Endverpackungen befüllt werden.

Wesentlich ist also, dass die Endverpackungen nicht dauerhaft in der Verpackungsvorrichtung verbleiben, sondern dem Verpackungsprozess mittels geeigneter Zuführmittel zugeführt werden und nach dem Beladen aus der Verpackungsvorrichtung mittels geeigneter Ausschleusemittel ausgeschleust werden.

Bevorzugt besteht jede Endverpackungseinheit aus einem mehrere Öffnungen zur jeweiligen Aufnahme eines Kunststoffspritzgussteils aufweisenden Träger, beispielsweise aus Kunststoff oder Metall. Ganz besonders bevorzugt handelt es sich um metallische Träger, beispielsweise aus Aluminium, die hochpräzise gefertigt sind und die nach deren bestimmungsgemäßer Verwendung beim Endkunden, insbesondere in einem Analysegerät, leer zum Verpackungsprozess zurückgelangen und wieder befüllt werden können. Zusätzlich oder alternativ zu den jeweils A Öffnungen bzw. Vertiefungen können die Endverpackungseinheiten A Aufsteckelemente zum Aufstecken der Kunststoffspritzgussteile aufweisen.

Alternativ handelt es sich bei den Endverpackungseinheiten um Wegwerfträger (Einwegträger), z.B. aus Kunststoff. Unabhängig von der Materialwahl des Trägers sind diese bevorzugt ausgebildet und bestimmt, um in einem Analysegerät, insbesondere einem Blutanalysegerät eingesetzt zu werden. Bevorzugt sind die Träger so auf bekannte Analysegeräte abgestimmt, dass diese in diese eingesetzt werden können, sodass die Analysegeräte, bevorzugt automatisch, Pipettenspitzen oder medizinische Reaktionsgefäße aus dem Träger entnehmen können.

Idealerweise wird das nach dem Konzept der Erfindung ausgebildete Verfahren angewendet, wenn die Anzahl der pro Endverpackungseinheit vorzusehenden A Kunststoffspritzgussteile nicht der Anzahl der Kavitäten oder nicht einem ganzzahligen Vielfachen der Anzahl der an Kavitäten entspricht, wobei auch selbstverständlich dies möglich ist.

Wie eingangs erwähnt, sind die K Kavitäten in Spritzgussvorrichtungen, bevorzugt gleichmäßig, auf C Cluster verteilt angeordnet. Üblicherweise, jedoch nicht zwingend sind die Kavitäten eines Clusters beispielsweise auf einem gedachten Kreisumfang oder den Ecken eines Rechtecks, insbesondere eines Quadrates angeordnet. Bei einem Cluster handelt es sich um eine geometrische Kavitätenanordnung im Werkzeug. Üblicherweise, jedoch nicht zwingend, werden die ein Cluster bildenden Kavitäten über eine zugehörige Unterverteilung mit flüssigem Kunststoff versorgt - auf die Art der Anspritzung oder Versorgung der Kavitäten kommt es im Rahmen der Erfindung jedoch ausdrücklich nicht an - angesprochen werden soll hier nur die geometrische Zuordnung von Kavitäten zu Clustern. Bevorzugt weist jedes Cluster die gleiche Anzahl an Kavitäten auf. Besonders zweckmäßig ist es, wenn mehrere Cluster über und/oder untereinander angeordnet sind, also eine linienförmige oder matrixartige Anordnung in einem Kavitätenfeld einer Spritzgussvorrichtung aufweisen.

Die beiden senkrecht zueinander verlaufenden Achsen, entlang derer die Unter-Untergruppen, insbesondere Gruppen von Unter-Untergruppen, bevorzugt clusterreine Gruppen von Unter-Untergruppen, nach deren gleichmäßiger Befüllung verstellt werden liegen in einer Anordnungsebene, in der die Unter-Untergruppen zunächst gebildet werden. Diese Ebene ist jedoch in der Regel nicht ortsfest sondern wird räumlich, insbesondere translatorisch und/oder rotatorisch während des Verpackungsverfahrens verstellt. Bevorzugt erstrecken sich die beiden senkrecht zueinander verlaufenden Achsen senkrecht zu einer Längsachse, insbesondere Längsmittelachse der Kunststoffspritzgussteile. Dabei fällt die Längsachse der Kunststoffspritzgussteile bei bestimmungsgemäßer Verwendung, beispielsweise in einem Blutanalysegerät, üblicherweise mit einer Vertikalachse zusammen. Aufgrund einer optimierten Entformbarkeit fällt bevorzugt die Längsachse der Kunststoffspritzgussteile mit einer Entnahmeachse, entlang derer die Kunststoffspritzgussteile aus der jeweiligen Kavität entnommen werden zusammen.

Im Laufe des Verfahrens fällt die Anordnungsebene mit der Ablageebene zusammen, wobei bevorzugt hierzu die Anordnungsebene mit den darin angeordneten Unter-Untergruppen gedreht wird.

In Weiterbildung der Erfindung ist mit Vorteil vorgesehen, dass die Relativanordnung der Kunststoffspritzgussteile in den jeweiligen Unter-Untergruppen bis zum Befüllen der Endverpackungen und nach dem Befüllen in diesen gleich bleibt.

Bevorzugt erfolgt die Ablage bzw. Übergabe sämtlicher Kunststoffspritzgussteile eines Schusses in die Unter-Untergruppen gleichzeitig und nicht durch Mehrfachablage jeweils eines Teils der Kunststoffspritzgussteile eines Schusses, um hierdurch die Zykluszeit weiter zu optimieren. Dies bedingt, dass die Kunststoffspritzgussteile jedes Schusses, vorzugsweise entlang einer senkrecht zur Entnahme der Achse verlaufenden Transportachse auf die jeweilige Übergaberelativposition zur Übergabe in die Untergruppen auseinandergezogen werden, ganz besonders bevorzugt, wie später noch erläutert werden wird, mit einem mehrteiligen Entnahmegreifer.

In Weiterbildung der Erfindung ist es daher mit Vorteil vorgesehen, dass die gleichzeitige Entnahme der K Kunststoffspritzgussteile eines jeweiligen Schusses mit mehreren, insbesondere zwei, ganz besonders bevorzugt ausschließlich zwei, Entnahmegreifereinheiten eines Entnahmegreifers durchgeführt wird, wobei die Kunststoffspritzgussteile jedes Clusters, bevorzugt gleichmäßig aufgeteilt werden auf mindestens zwei Teilmengen von Kunststoffspritzgussteilen. Die Aufteilung erfolgt bevorzugt entlang einer Symmetrieachse des Clusters, bevorzugt einer vertikalen Symmetrieachse, also derart, dass die auf zwei unterschiedlichen Seiten der Symmetrieachse befindlichen Kavitäten eines Clusters jeweils eine eigene Teilmenge bilden. Jede der Teilmengen von Kunststoffspritzgussteilen eines Clusters wird von einer der Entnahmegreifereinheiten des Entnahmegreifers entnommen, wobei die Teilmengen jedes Clusters durch Relativverstellen der Entnahmegreifereinheiten voneinander beabstandet werden, insbesondere, wie erwähnt, entlang einer senkrecht zur Entnahmeachse verlaufenden Transportachse, entlang derer die K Kunststoffspritzgussteile nach der Entnahme verstellt sind.

Besonders bevorzugt ist es, wenn die Teileinheiten der C Cluster gleichmäßig auf die Entnahmegreifereinheiten verteilt werden, wobei zu diesem Zweck bevorzugt die Entnahmegreifereinheiten ineinandergreifen. Bevorzugt ist zumindest eine, vorzugsweise ausschließlich eine der Entnahmegreifereinheiten als Schlitten ausgebildet und somit translatorisch, vorzugsweise linear mittels eines Servoantriebs (jedoch nicht beschränkt hierauf), relativ zu der anderen Entnahmegreifereinheit verstellbar, um die Kunststoffspritzgussteile bereits auf dem Entnahmegreifer so zu positionieren, dass diese in einer gemeinsamen Übergabebewegung auf die Unter-Untergruppen verteilt werden können.

Im Hinblick auf die konkrete Ausgestaltung bzw. den Wirkmechanismus des Entnahmegreifers ist man grundsätzlich frei. Bevorzugt handelt es sich um Vakuumgreifer, die die Kunststoffspritzgussteile durch Anlegen von Unterdruck ansaugen bzw. halten. Die Übernahme und das Halten kann alternativ auch rein mechanisch, insbesondere durch Klemmen erfolgen, oder durch eine Kombination aus Unterdruck und mechanischem Haltemechanismus. Auch andere Lösungen sind hier denkbar.

Wesentlich ist, dass der Begriff Entnahmegreifer nicht auf ein mechanisches Greifen beschränkt ist bzw. dieses ausführen können muss. Die Kunststoffspritzgussteile müssen lediglich für den jeweiligen Zweck positioniert, insbesondere gehalten, werden.

Bevorzugt erfolgt die Beabstandung der Teilmengen voneinander derart, dass die jeweils in dieselbe der Unter-Untergruppen zu überführenden Kunststoffspritzgussteile von zwei aufeinanderfolgenden Schüssen den gleichen Abstand zueinander aufweisen, den diese dann auch in der Endverpackung voneinander haben.

Weiter bevorzugt erfolgt das relative Verstellen der Unter-Untergruppen, bevorzugt der, besonders bevorzugt clusterreinen, Gruppen von Unter-Untergruppen entlang der zwei senkrecht zueinander verlaufenden Achsen derart, dass diejenigen Unter-Untergruppen, die kavitätenrein mit Kunststoffspritzgussteilen aus sich entsprechenden Kavitäten der C Cluster befüllt sind, gleichzeitig, insbesondere in einer ausschließlich axialen, bevorzugt vertikalen Translationsbewegung, in die zugehörige kavitätenreinen Untergruppen in der Ablageebene überführbar sind. Bezüglich der vorgenannten Unter-Untergruppen mit Kunststoffspritzgussteilen aus sich entsprechenden Kavitäten sollte also eine Mehrfachübergabe zu deren Überführung in die Untergruppen vermieden. Unter sich entsprechenden Kavitäten der C Cluster werden dabei diejenigen Kavitäten verstanden, die in den jeweiligen Cluster die gleiche Relativposition aufweisen.

Erreicht werden kann dies insbesondere dadurch, dass die Unter-Untergruppen , bevorzugt der, besonders bevorzugt clusterreinen, Gruppen von Unter-Untergruppen, so relativ zueinander, insbesondere mit voneinander separaten Verstelleinheiten, entlang der zwei rechtwinklig zueinander orientierten Achsen relativ verstellt werden, dass vor der Übergabe in die Ablageebene, d.h. vor der Überführung in die zugehörigen Untergruppen, die Abstandsmaße derjenigen Unter-Untergruppen zueinander, die kavitätenrein mit Kunststoffspritzgussteilen aus sich entsprechenden Kavitäten der C Cluster befüllt sind, den Abstandsmaßen der diese Unter-Untergruppen aufnehmenden Untergruppen in der Ablageebene entsprechen.

Das Transferieren der Unter-Untergruppen zu der Ablageebene erfolgt mithilfe von Transfermitteln. Grundsätzlich ist es möglich, Transfermittel, die eine einzige Verstelleinheit umfassen, die so ausgebildet ist, dass auf dieser gleichzeitig oder nacheinander eine Voneinanderwegverstellung der Unter-Untergruppen, bevorzugt der, besonders bevorzugt clusterreinen, Gruppen von Unter-Untergruppen, entlang der zwei Achsen erfolgt, beispielsweise in Form einer Kreuztischanordnung. Zweckmäßiger und bevorzugt ist es jedoch, wenn die Transfermittel zwei separate Verstelleinheiten umfassen und jede dieser Verstelleinheiten die Unter-Untergruppen, bevorzugt der, besonders bevorzugt clusterreinen, Gruppen von Unter-Untergruppen, entlang einer einzigen der beiden senkrecht zueinander verlaufenden Achsen relativ zueinander verstellt, wobei die Unter-Untergruppen, bevorzugt die, besonders bevorzugt clusterreinen, Gruppen von Unter-Untergruppen nach dem Relativverstellen entlang einer der beiden Achsen von der ersten der Verstelleinheiten auf die zweite der Verstelleinheiten überführt werden und danach auf der zweiten Verstelleinheit das Auseinanderziehen (Relativverstellen) entlang der weiteren Achse erfolgt.

Im Hinblick auf eine optimale Raumausnutzung ist es bevorzugt, wenn zumindest eine der Verstelleinheiten, vorzugsweise beide Verstelleinheiten verschwenkbar angeordnet sind, um die Unter-Untergruppen um einen Schwenkwinkel, vorzugsweise von jeweils 90° zu verschwenken, vorzugsweise einmal um eine Vertikalachse und das andere Mal um eine Horizontalachse.

Im Hinblick auf den Ort der Unter-Untergruppenbildung ist es von Vorteil, wenn dieser von Transfermitteln gebildet wird, mit denen die Unter-Untergruppen nach deren Fertigstellung in die Ablageebene transportiert werden. Ganz besonders bevorzugt werden sie im Falle des Vorsehens mehrerer Verstelleinheiten von einer ersten der Verstelleinheiten gebildet. Die Bildung der Unter-Untergruppen erfolgt durch mehrfaches, jeweils gleichzeitiges Übergeben von K Kunststoffspritzgussteilen auf die Transfermittel, insbesondere mittels, ganz besonders bevorzugt mehrteiligen, Entnahmegreifers. Dabei werden mehrfach hintereinander solange Schüsse von K Kunststoffspritzgussteilen auf die Unter-Untergruppen verteilt, bis diese die gewünschte Anzahl von Kunststoffspritzgussteilen aufweisen. Alternativ zu einer Bildung der Unter-Untergruppen auf den Transfermitteln ist es denkbar eine die Transfermitteln vorgeordnete Ablageeinheit vorzusehen, von der aus dann die fertigen Unter-Untergruppen auf die Transfermittel übertragen werden.

In Weiterbildung der Erfindung ist mit Vorteil vorgesehen, dass die Unter-Untergruppen in die Ablageebene überführt, insbesondere dort abgelegt werden, mittels einer Verstelleinrichtung, auf der die von dieser getragenen Unter-Untergruppen bis auf den eigentlichen Übergabevorgang in die Ablageebene ortsfest relativ zueinander angeordnet bleiben. Das Überführen in die Ablageebene kann im einfachsten Fall durch Anfahren der gewünschten Ablageposition und Fallenlassen der Kunststoffspritzgussteile, insbesondere durch Lösen eines mechanischen Greifers oder durch Unterbrechen von Unterdruck erfolgen. Alternativ kann ein mechanischer Übergabehub, insbesondere entlang einer Vertikalachse realisiert werden.

Ganz besonders zweckmäßig ist es, wenn die Verstelleinrichtung zur Überführung der Unter-Untergruppen in die Ablageebene sämtliche K Unter-Untergruppen trägt und dass zur Überführung, insbesondere Ablage von K Unter-Untergruppen in die Ablageebene eine der Anzahl der Kavitäten pro Cluster entsprechende Anzahl an Ablagepositionen angefahren werden und bei jedem Überführungsvorgang jeweils gleichzeitig diejenigen Unter-Untergruppen abgelegt werden, die mit Kunststoffspritzgussteilen aus sich entsprechenden Kavitäten der C Cluster befüllt sind.

Wie erläutert, betrifft die Erfindung auch eine Verpackungsvorrichtung zur Ausführung eines erfindungsgemäßen Verfahrens. Hierzu weist die Vorrichtung entsprechende Funktionsmittel auf, die derart ausgebildet und von Steuermitteln angesteuert sind, dass diese die jeweiligen Verfahrensschritte ausführen. So umfasst die erfindungsgemäße Verpackungsvorrichtung mindestens einen, insbesondere wie in Weiterbildung der Erfindung vorgesehen ist mehrere Entnahmegreifereinheiten aufweisenden Entnahmegreifer, der ausgebildet und von Steuermitteln angesteuert ist zum mehrfachen, jeweils gleichzeitigen Entnehmen eines jeweiligen Schusses von K Spitzgussteilen aus K Kavitäten einer (nicht zur Verpackungsvorrichtung gehörenden, jedoch bevorzugt daneben anordenbaren) Spritzgussvorrichtung, deren Werkzeuge zur Herstellung von Pipettenspitzen oder medizinischen Reaktionsgefäßen ausgebildet sind und bei der die K Kavitäten, bevorzugt gleichmäßig, auf C Cluster verteilt angeordnet sind. Ferner umfasst die Verpackungsvorrichtung Untergruppenbildungsmittel zur Bildung von kavitätenreinen Untergruppen sowie Mittel zum kavitätenreinen oder kavitätensortieren Auffüllen mehrerer Endverpackungseinheiten, wobei diese Mittel im Falle der Direktbeladung von den Untergruppenbildungsmitteln gebildet sein können.

Die Verpackungsvorrichtung zeichnet sich ferner durch Unter-Untergruppenbildungsmittel aus, die zur, wie im Rahmen der Erläuterung des Verfahrens beschriebenen Unter-Untergruppenbildung ausgebildet sind, wobei dann mehrfach hintereinander K Unter-Untergruppen mithilfe der Untergruppenbildungsmittel zu kavitätenreinen Untergruppen in der Ablageebene zusammengesetzt werden. Die Relativverstellung der K Unter-Untergruppen, bevorzugt Gruppen Unter-Untergruppen, weiter bevorzugt clusterreinen Gruppen von Unter-Untergruppen, entlang der zwei senkrecht zueinander verlaufenden Achsen voneinander weg erfolgt über bevorzugt den Untergruppenbildungsmitteln zugeordneten Transfermitteln.

Darüber hinaus betrifft die Erfindung ein Spritzgusssystem, umfassend eine wie zuvor beschriebene ausgebildete Spritzgussvorrichtung zum Herstellen von Pipettenspitzen oder medizinischen Reaktionsgefäßen, bei der die K Kavitäten, bevorzugt gleichmäßig, auf C Cluster verteilt angeordnet sind sowie eine erfindungsgemäße Verpackungsvorrichtung.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in:
- Fig. 1:: ein Kavitätenfeld einer Spritzgussvorrichtung mit hier beispielhaft insgesamt acht Clustern a acht Kavitäten zur gleichzeitigen Herstellung von hier beispielhaft 64 als Pipettenspitzen oder medizinische Reaktionsgefäße ausgebildeten Kunststoffspritzgussteilen,
- Fig. 2a:: einen zwei Entnahmegreifereinheiten aufweisenden Entnahmegreifer,
- Fig. 2b:: ein Detail A aus Fig. 2a,

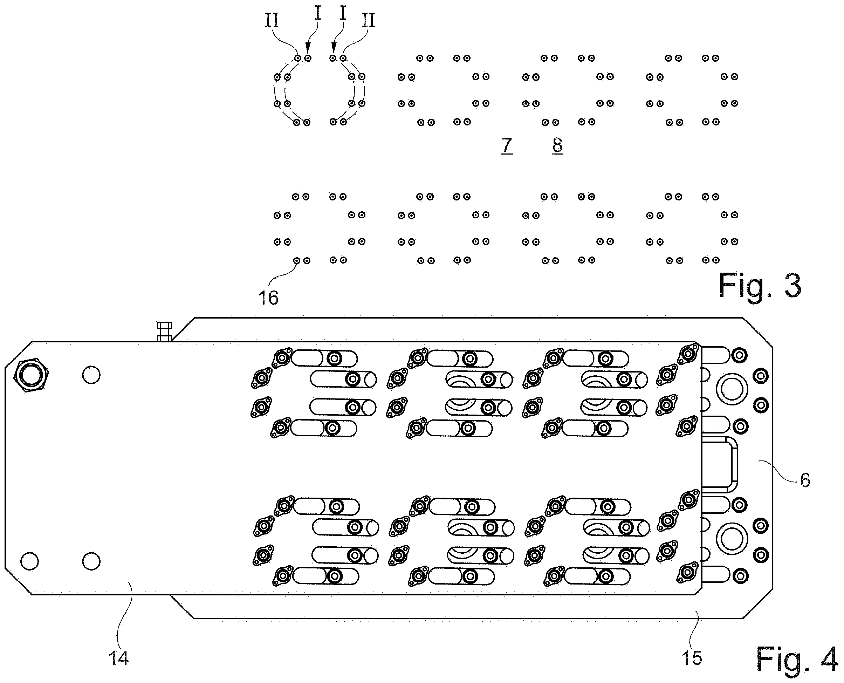

- Fig. 3:: einen zweiten Schritt während einer Unter-Untergruppenbildung, wobei zu erkennen ist, dass die K Kunststoffspritzgussteile eines zweiten Schusses (jeweils weiter außen) weiter entlang einer Verstellachse, hier einer senkrecht zur Entnahmeachse verlaufenden Transportachse (Transferachse) verstellt sind, als die ersten (inneren) Kunststoffspritzgussteile des ersten Schusses, um so einen während des weiteren Verfahrens festen Abstand zwischen den unmittelbar benachbarten Kunststoffspritzgussteilen jeder Untergruppe einzustellen, der während des weiteren Verfahrens, bis in die Endverpackungen hinein, gleich bleibt,
- Fig. 4:: den Entnahmegreifer gemäß Fig. 2a in einer verglichen mit Fig. 2a weiter voneinander weg verstellten Relativposition der beiden Entnahmegreifereinheiten zur Ablage bzw. Übergabe der K Kunststoffspritzgussteile des zweiten Schusses wie in Fig. 3 gezeigt,
- Fig. 5:: einen dritten Schritt bei der Bildung von Unter-Untergruppen, aus dem ersichtlich ist, dass der dritte Schuss von K Kunststoffspritzgussteilen bzw. die zugehörigen Teilmengen weiter voneinander weg verstellt sind als bei der vorangehenden Situation gemäß Fig. 3,
- Fig. 6:: die zugehörige Relativposition der Entnahmegreifereinheiten des Entnahmegreifers,
- Fig. 7a:: clusterreine Gruppen von fertig bestückten Unter-Untergruppen,
- Fig. 7b:: clusterreine Gruppen von Untergruppen gemäß Fig. 7a, jedoch weiter entlang einer ersten Achse auseinandergezogen,
- Fig. 7c:: die clusterreinen Gruppen von Unter-Untergruppen gemäß Fig. 7b, jedoch entlang einer zweiten, rechtwinklig zu der Achse gemäß Fig. 7b verlaufenden Achse weiter auseinandergezogenen Untergruppen,

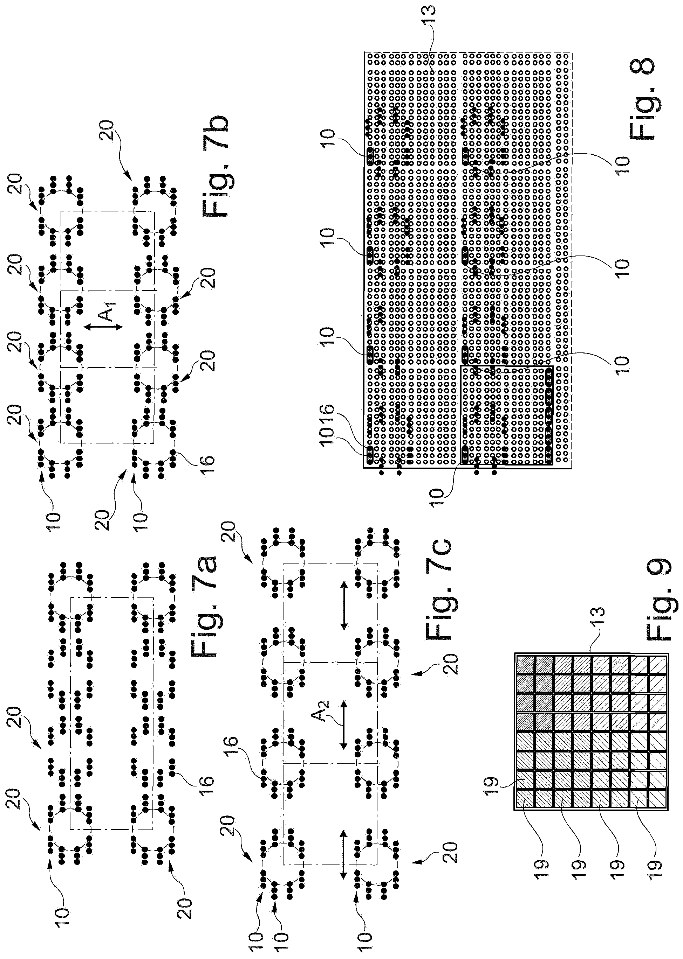

- Fig. 8:: eine Überführsituation von Unter-Untergruppen in die hier beispielhaft von einem Zwischenspeicher gebildete Ablageebene, wobei hier gleichzeitig sämtliche Unter-Untergruppen abgelegt werden, die mit Kunststoffspritzgussteilen aus sich entsprechen- den Kavitäten der unterschiedlichen Cluster, hier mit Kunststoffspritzgussteilen aus der jeweiligen Kavität oben links der unterschiedlichen Cluster bestückt sind und somit kavitätenreine Untergruppen gebildet werden, wobei nach Übergabe dieser Unter-Untergruppen die auf der Verstelleinrichtung verbleibenden Unter-Untergruppen mittels einer Verstelleinrichtung verstellt werden und dann wiederum ein Anteil der Unter-Untergruppen mit aus sich entsprechenden Kavitäten befüllt und Kunststoffspritzgussteilen zur Bildung weiterer Untergruppen an anderer Position auf die Ablageebene übergeben werden, usw. bis sämtliche Unter-Untergruppen überführt wurden, um dann bei dem darauffolgenden Zyklus die jeweiligen Unter-Untergruppen kavitätenrein zu ergänzen,
- Fig. 9:: eine Draufsicht auf die Ablageebene, wobei hier beispielhaft acht Ablagebereiche unterschiedlich strichliert gekennzeichnet sind, in denen jeweils acht kavitätenreine Untergruppen durch jeweiliges Mehrfachablegen von kavitätenreinen Unter-Untergruppen gebildet werden,
- Fig. 10:: wesentliche Bestandteile eines bevorzugten Ausführungsbeispiels einer erfindungsgemäßen Verpackungsvorrichtung, umfassend den mehrteiligen Entnahmegreifer, zwei hier beispielhaft verschwenkbare Verstelleinheiten umfassende Transfermittel sowie eine Verstelleinrichtung zur Überführung der gebildeten Unter-Untergruppen in die beispielhaft von einem Zwischenspeicher gebildete Ablageebene - alternativ für die Ablageebene von mehreren nebeneinander angeordneten Endverpackungen gebildet und die Untergruppen kavitätenrein oder kavitätensortiert unmittelbar in diesen gebildet.

In den Figuren sind gleiche Elemente und Elemente mit den gleichen Funktionen mit den gleichen Bezugszeichen gekennzeichnet.

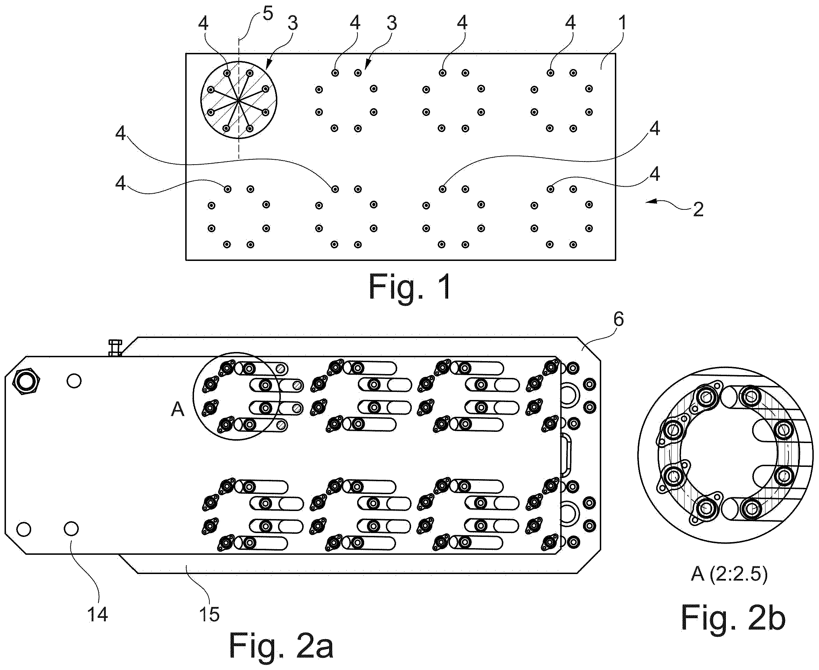

Fig. 1 zeigt eine Draufsicht auf ein Kavitätenfeld 1 einer (Kunststoff)-Spritzgussvorrichtung 2. Zu erkennen sind insgesamt acht Cluster 3 (geometrische Clusteranordnungen, die in dem Ausführungsbeispiel jeweils über eine Unterverteilung mit flüssigem Kunststoff versorgt werden), jeweils umfassend acht hier beispielhaft jeweils kreisförmig angeordnete Kavitäten 4. In der Zeichnung ist eine Menge von sich entsprechenden Kavitäten 4 in den unterschiedlichen Clustern 3 jeweils mit dem Bezugszeichen 4 gekennzeichnet. Es handelt sich in der Darstellung bei den angezogenen Kavitäten 4 beispielhaft um jeweils die Kavität 4 oben links. Das Kavitätenfeld 1 bzw. die Cluster 3 enthalten vorliegend sieben weitere Gruppen von sich entsprechenden Kavitäten 4.

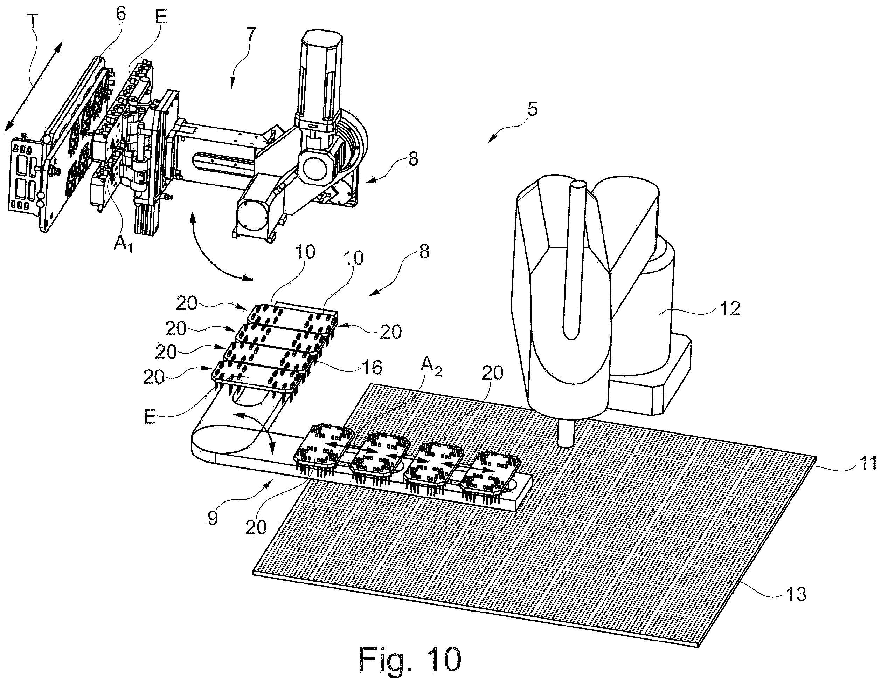

Fig. 10 zeigt ein Ausführungsbeispiel einer erfindungsgemäßen Verpackungsvorrichtung 5. Diese umfasst einen mehrteiligen Entnahmegreifer 6, der entlang einer Transportachse T (Transferachse) verstellbar ist. Die Transportachse T verläuft senkrecht zu einer nicht eingezeichneten Entnahmeachse, entlang derer ein Entnahmehub aus dem Kavitätenfeld 1 gemäß Fig. 1 erfolgt. Die Entnahmeachse E steht senkrecht auf der Flächenerstreckung des Entnahmegreifers 6.

Benachbart zu dem Entnahmegreifer 6 ist eine erste Verstelleinheit 7 von Transfermitteln 8 gezeigt, die neben der ersten Verstelleinheit 7 eine zweite Verstelleinheit 9 umfassen. Mittels der beiden Verstelleinheiten 7, 9 der Transfermittel 8 werden Gruppen 20 von jeweils fertig gebildete kavitätenreine Unter-Untergruppen 10 entlang von zwei senkrecht aufeinanderstehenden Achsen A₁, A₂ relativ zueinander verstellt, konkret auseinandergezogen bzw. weiter voneinander beabstandet. Die Gruppen 20 sind in diesem Ausführungsbeispiel clusterrein, umfassen also jeweils ausschließlich Kunststoffspritzgussteile aus demselben Cluster 3. Vorliegend umfasst jede Gruppe sämtliche aus den Kavitäten eines jeweiligen Clusters 3 entstammende Kunststoffspritzgussteile 16. Anders ausgedrückt ist jede Gruppe 20 von Unter-Untergruppen ausschließlich einem der Cluster zugeordnet. Die Gruppen erstrecken sich entlang von vorliegend zwei parallelen, alternativ mehr als zwei parallelen oder nur einer einzigen Linie/n.

Im vorliegenden Ausführungsbeispiel handelt es sich bei der Achse A₁ um eine Vertikalachse und bei der Achse A₂ um eine Horizontalachse. Beide Verstelleinheiten 7, 9 sind in dem vorliegenden Ausführungsbeispiel verschwenkbar ausgebildet, die erste Verstelleinheit 7 um eine orizontalachse und die zweite Verstelleinheit 9 um eine Vertikalachse, wobei es sich lediglich um eine fakultative, jedoch bevorzugte Ausgestaltung handelt. Jede der Verstelleinheiten 7, 9 ist verantwortlich für die translatorische Voneinanderwegverstellung der Gruppen 20 von Unter-Untergruppen 10 um jeweils eine der Achsen A₁, A₂.

Die absolute Position der Achsen A₁, A₂ verändert sich während des Verpackungsprozesses - ihre senkrechte Relativposition bleibt jedoch gleich aufgrund der Anordnung in einer Anordnungsebene E der Unter-Untergruppen 10, die selbst wiederum während des Verfahrens positionsverändert wird. Wesentlich ist, dass die Gruppen 20 von Unter-Untergruppen 10 in einer Anordnungsebene E während des Verfahrens entlang von zwei senkrecht aufeinanderstehenden Achsen A₁, A₂ auseinandergezogen werden, derart, dass die kavitätenreinen Kunststoffspritzgussteile 16 aus sich entsprechenden Kavitäten 4 der C Cluster 3 befüllten Unter-Untergruppen 10 gleichzeitig, vorliegend in einer ausschließlich axialen, hier vertikalen, Translationsbewegung in die zugehörigen kavitätenreinen Untergruppen 19 in der Ablageebene 13 überführbar sind. Die Ablageebene 13 wird in dem Ausführungsbeispiel gebildet von einem Zwischenspeicher 11, wobei zur Überführung der translatorisch entlang der beiden Achsen A₁, A₂ verstellten Unter-Untergruppen 10 eine Verstelleinrichtung 12 dient, die sämtliche Unter-Untergruppen 10 übernimmt und eine der Anzahl von Kavitäten 4 pro Cluster 3, vorliegend acht, unterschiedliche Ablagepositionen anfährt, um bei jedem Ablage- bzw. Übergabevorgang diejenigen Unter-Untergruppen 10 gleichzeitig in die Ablageebene 13 zu übergeben, die aus sich entsprechenden Kavitäten 4 der Cluster 3 mit Kunststoffspritzgussteilen 16 befüllt sind.

In den Fig. 2a und 2b ist der Entnahmegreifer 6 in einer Ausgangsposition zur Übernahme eines ersten Schusses von K Kunststoffspritzgussteilen 16 bei einem Unter-Untergruppenbildzyklus gezeigt. Der Entnahmegreifer 6 umfasst eine erste Entnahmegreifereinheit 14 und eine zweite Entnahmegreifereinheit 15. Die erste Entnahmegreifereinheit 14 ist relativ zu der zweiten Entnahmegreifereinheit 15 translatorisch, bevorzugt mittels eines Servomotors entlang der Transportachse T gemäß Fig. 10 verstellbar, sodass die Entnahmegreifereinheiten 14, 15 unterschiedliche feste Relativpositionen zueinander einnehmen können, die den Abstand von benachbarten Kunststoffspritzgussteilen 16 in einer jeweiligen Unter-Untergruppe 10 definieren.

Nach der Entnahme des erstes Schusses I von K Kunststoffspritzgussteilen 16 kann, muss jedoch nicht (wie im vorliegenden Ausführungsbeispiel) eine Relativverstellung der Entnahmegreifereinheiten 14, 15 zueinander erfolgen. Der erste Schuss I von K Kunststoffspritzgussteilen 16 wird entnommen entlang der Entnahmeachse, dann translatorisch entlang der Transportachse T verstellt und vorliegend auf die erste Verstelleinheit 7 der Transfermittel 8 übergeben. In Fig. 3 sind die in zwei Halbkreisen angeordneten K Kunststoffspritzgussteile 16 des ersten Clusters 3 des ersten Schusses mit dem Bezugszeichen I gekennzeichnet. Zur Entnahme der K Kunststoffspritzgussteile 16 des zweiten Schusses II weisen die Entnahmegreifereinheiten 14, 15 in jedem Fall wieder die Relativposition gemäß Fig. 2a auf, fahren jedoch, bevorzugt während der Verstellbewegung entlang der Transportachse T in die in Fig. 4 gezeigte Relativposition, um die K Kunststoffspritzgussteile 16 des zweiten Schusses II kavitätenrein zu den K Kunststoffspritzgussteilen 16 des ersten Schusses I zu Unter-Untergruppen 10 ergänzen zu können. Die Unter-Untergruppen 10 wachsen dabei linienförmig entlang der Transportachse T. Aufgrund der Relativbewegung der Entnahmegreifereinheiten 14, 15 können auch die K Kunststoffspritzgussteile 16 des zweiten Schusses II und insgesamt jedes Schusses I, II, III jeweils gleichzeitig zu den Unter-Untergruppen 10, vorliegend auf den Transfermitteln 8 ergänzt werden.

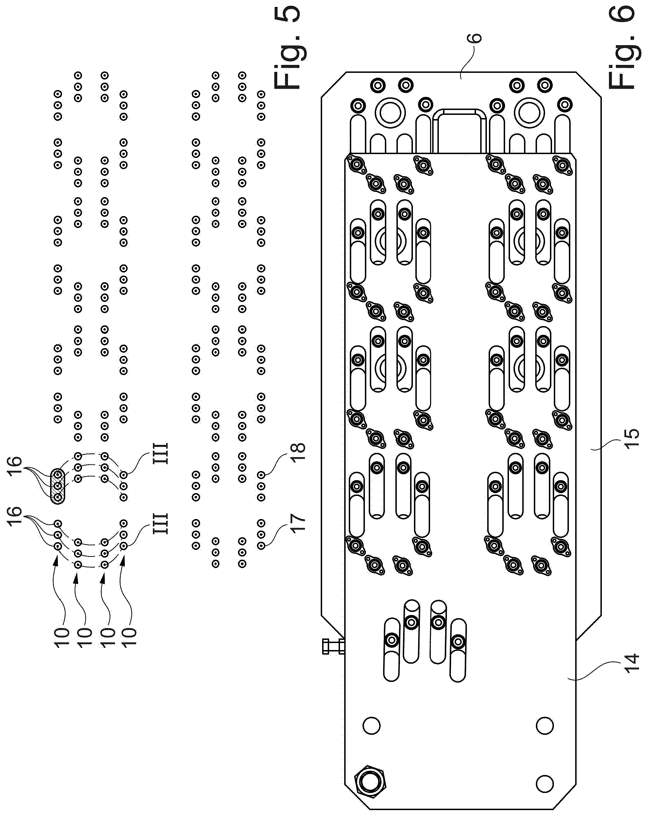

Zur Entnahme des dritten Schusses von K Kunststoffspritzgussteilen 16 fahren die Entnahmegreifereinheiten 14, 15 zunächst wieder in die Relativposition gemäß Fig. 2, um nach der Entnahme die Relativposition gemäß Fig. 6 einnehmen zu können, in der dann die gleichzeitige Übergabe der K Kunststoffspritzgussteile 16 des dritten Schusses erfolgt.

In dem gezeigten Ausführungsbeispiel weist jede Unter-Untergruppe 10 lediglich beispielhaft nach deren fertiger Bestückung drei Kunststoffspritzgussteile 16 auf, die bereits aufgrund der Verstellung der Entnahmegreifereinheiten 14, 15 zueinander vor der Übergabe in die Unter-Untergruppen 10 die endgültige Relativposition, d.h. den endgültigen Abstand (Rastermaß) zueinander aufweisen.

Mit den Entnahmegreifereinheiten 14, 15 werden also nach einem jeweiligen Entnahmehub die Kavitäten 4 jedes Clusters 3 aufgeteilt in jeweils zwei Teilmengen 17, 18, wobei jede Teilmenge 17, 18 in diesem Ausführungsbeispiel jeweils vier halbkreisförmig angeordnete Kunststoffspritzgussteile 16 aufweist. Die Aufteilung erfolgt entlang, d.h. zu beiden Seiten einer jeweiligen Cluster-Symmetrieachse S, die exemplarisch in Fig. 1 lediglich für das linke obere Cluster 3 eingezeichnet wurde.

Aus den Fig. 7a bis 7c ist zu erkennen, dass, wie eingangs im Zusammenhang mit Fig. 10 erläutert, die clusterreinen Gruppen 20 von Unter-Untergruppen 10 mittels der Transfermittel 8 nacheinander auf zwei unterschiedlichen Verstelleinheiten 7, 9 entlang der zwei senkrecht zueinander orientierten Achsen A₁, A₂ relativ zueinander verstellt werden. Besonders vorteilhaft ist es, wie vorliegend gezeigt, wenn die jeweils aus den Kavitäten 4 eines jeweiligen Clusters 3 gebildeten Unter-Untergruppen 10 eine Gruppe 20 bilden und darin eine feste Relativposition zueinander beibehalten, dass also Gruppen von jeweils clusterreinen Unter-Untergruppen 10 relativ zueinander entlang der Achsen A₁, A₂ zueinander verstellt werden.

In Fig. 8 ist eine erste von mehreren, vorliegend insgesamt acht Übergabesituationen von Untergruppen 19 in die Ablageebene 13 gezeigt. Bei diesem Übergabevorgang werden lediglich die in Fig. 8 grau hinterlegten Unter-Untergruppen 10 übergeben, die aus sich entsprechenden Kavitäten 4 der unterschiedlichen Cluster 3 bestückt wurden. Nach Übergabe dieser Unter-Untergruppen 10 wird mittels der Verstelleinrichtung 12 gemäß Fig. 10 eine andere Ablageposition angefahren.

In Fig. 9 ist die Ablageebene 13 nicht nur ausschnittsweise geziegt. Zu erkennen sind jeweils acht unterschiedlich strichlierte Bereiche mit jeweils vier Flächen. Die linken oberen acht Flächen gemäß Fig. 9 entsprechen den vollständig in Fig. 8 gezeigten Flächen. Auf jeder der vorliegend beispielhaft quadratischen Flächen gemäß Fig. 9 wird eine kavitätenreine Untergruppe 19 gebildet, durch Mehrfachübergabe, insbesondere Ablage von kavitätenreinen Unter-Untergruppen 10. In dem konkreten Ausführungsbeispiel entstehen also insgesamt 64 kavitätenreine Untergruppen 19, also für jede Kavität 4 eine zugeordnete Untergruppe 19.

Nachdem also die mit Kunststoffspritzgussteilen 16 aus der jeweils oberen linken Kavität 4 eines jeweiligen Clusters 3 gefüllten Unter-Untergruppen 10 in die oberen acht Flächen bzw. Felder gemäß Fig. 8 und 9 übergeben und dort zu jeweils einer Untergruppe 19 ergänzt wurden, fährt die Verstelleinrichtung 12 beispielsweise die in Fig. 9 rechts daneben angeordneten acht Flächen bzw. Untergruppen 19 an und legt dort beispielsweise diejenigen Unter-Untergruppen 10 ab, die aus anderen sich entsprechenden Kavitäten 4 der unterschiedlichen Cluster 3 gefüllt sind, vorliegend beispielsweise mit Kunststoffspritzgussteilen 16 aus den Kavitäten 4 oben links. Insgesamt wird dieser Vorgang so oft wiederholt, bis sämtliche Unter-Untergruppen 10 auf die Untergruppen 19 verteilt sind. Die Anzahl der Überführ- bzw. Ablagevorgänge entspricht also der Anzahl von Kavitäten 4 pro Cluster 3, vorliegend also acht.

### Bezugszeichen

- 1: Kavitätenfeld
- 2: Spritzgussvorrichtung
- 3: Cluster
- 4: Kavitäten
- 5: Verpackungsvorrichtung
- 6: Entnahmegreifer
- 7: erste Verstelleinheit
- 8: Transfermittel
- 9: zweite Verstelleinheit
- 10: Unter-Untergruppen
- 11: Zwischenspeicher
- 12: Verstelleinrichtung
- 13: Ablageebene
- 14: erste Entnahmegreifereinheit
- 15: zweite Entnahmegreifereinheit
- 16: Kunststoffspritzgussteile
- 17: Teilmenge
- 18: Teilmenge
- 19: Untergruppen
- 20: Gruppen

- T: Transferachse
- A₁: Achse
- A₂: Achse senkrecht auf Achse A1
- E: Anordnungsebene
- S: Cluster-Symmetrieachse
- I: erster Schuss
- II: zweiter Schuss
- III: dritter Schuss

## Patentansprüche

1. Verpackungsverfahren zum Verpacken von als Pipettenspitzen oder medizinische Reaktionsgefäße ausgebildeten Kunststoffspritzgussteilen **(16)** in Endverpackungseinheiten, umfassend die Schritte:
- mehrfaches, jeweils gleichzeitiges Entnehmen eines jeweiligen Schusses **(I, II, III)** von K Spritzgussteilen aus K Kavitäten **(4),** wobei die K Kavitäten **(4),** bevorzugt gleichmäßig, auf C Cluster **(3)** verteilt angeordnet sind,
- gleichmäßiges und kavitätenreines Verteilen der K Kunststoffspritzgussteile **(16)** auf U kavitätenreine Untergruppen **(19** in einer Ablageebene **(13),** bis jede Untergruppe **(19)** L Kunststoffspritzgussteile **(16)** aufweist, wobei die Anzahl L der Kunststoffspritzgussteile **(16)** einer Untergruppe **(19)** der Anzahl A der in einer Endverpackungseinheit maximal aufnehmbaren Kunststoffspritzgussteilen **(16)** oder einem ganzzahligen Teiler von A entspricht,
- kavitätenreines oder kavitätensortiertes Auffüllen der Endverpackungseinheiten mit den Untergruppen **(19),** bis die Endverpackungseinheiten jeweils A Kunststoffspritzgussteile **(16)** aufweisen, wobei die Ablageebene **(13)** entweder unmittelbar von den Endverpackungen oder von einem statischen oder verstellbaren, bevorzugt horizontalen, Zwischenspeicher **(11)** gebildet wird und die Untergruppen **(19)** aus dem Zwischenspeicher **(11)** in die Endverpackungseinheiten überführt werden,
**dadurch gekennzeichnet,**
**dass** mehrfach und solange hintereinander die K Kunststoffspritzgussteile **(16)** eines jeweiligen Schusses **(I, II, III)** in einer Anordnungsebene **(E)** kavitätenrein und gleichmäßig auf K kavitätenreine Unter-Untergruppen **(10)** derart verteilt werden, bis jede Unter-Untergruppe **(10) jeweils** mehrere, bevorzugt zwischen drei und fünf, Kunststoffspritzgussteile **(16) aus derselben Kavität** aufweist und dass die Kunststoffspritzgussteile **(16)** in den Unter-Untergruppen **(10)** jeweils derart, bevorzugt linienförmig, angeordnet werden, dass ein Abstand unmittelbar benachbarter Kunststoffspritzgussteile **(16)** in der jeweiligen Unter-Untergruppe **(10)** einem Abstand benachbarter Kunststoffspritzgussteile **(16)** in den Endverpackungseinheiten entspricht, und dass mehrfach und solange K Unter-Untergruppen **(10)** gleichmäßig auf die U Untergruppen **(19)** verteilt werden, bis jede Untergruppe **(19)** die L Kunststoffspritzgussteile **(16)** aufweist, und dass die K Unter-Untergruppen **(10),** insbesondere Gruppen **(20)** von Unter-Untergruppen **(10),** ganz besonders bevorzugt clusterreine Gruppen **(20)** von Unter-Untergruppen **(10),** vor dem Verteilen auf die U Untergruppen **(19)** relativ zueinander entlang von zwei senkrecht zueinander verlaufenden, in der Anordnungsebene **(E)** liegenden Achsen **(A₁**, **A₂)** zueinander, bevorzugt voneinander weg, verstellt werden.

2. Verpackungsverfahren nach Anspruch 1,
**dadurch gekennzeichnet,**
**dass** die Relativanordnung der Kunststoffspritzgussteile **(16)** in den jeweiligen Unter-Untergruppen **(10)** bis zum Befüllen der Endverpackungen und in diesen gleich bleibt.

3. Verpackungsverfahren nach einem der Ansprüche 1 oder 2,
**dadurch gekennzeichnet,**
**dass** die gleichzeitige Entnahme der K Kunststoffspritzgussteile **(16)** eines jeweiligen Schusses **(I, II, III**) mit mehreren, insbesondere zwei, Entnahmegreifereinheiten **(14, 15)** eines Entnahmegreifers **(6)** durchgeführt wird, wobei die Kunststoffspritzgussteile **(16)** jedes Clusters **(3)**, bevorzugt gleichmäßig, noch weiter bevorzugt entlang einer Clustersymmetrieachse, aufgeteilt werden auf jeweils mindestens zwei Teilmengen **(17, 18)** von Kunststoffspritzgussteilen **(16)**, wobei jede der Teilmengen (**17, 18**) von Kunststoffspritzgussteilen (**16**) eines Clusters (**3**) von einer der Entnahmegreifereinheiten (**14**, **15)** entnommen wird, und dass die Teilmengen (**17, 18**) jedes Clusters (**3**) durch Relativverstellen der Entnahmegreifereinheiten **(14, 15**) voneinander weiter beabstandet werden, insbesondere entlang einer senkrecht zu einer Entnahmeachse verlaufenden Transportachse **(T)** entlang derer die K Kunststoffspritzgussteile **(16)** nach der Entnahme verstellt werden.

4. Verpackungsverfahren nach Anspruch 3,
**dadurch gekennzeichnet,**
**dass** die Beabstandung der Teilmengen **(17, 18)** voneinander derart erfolgt, dass die jeweils in dieselbe der Unter-Untergruppen **(10)** zu überführenden Kunststoffspritzgussteile **(16)** von zwei aufeinanderfolgenden Schüssen **(I, II)** den gleichen Abstand zueinander aufweisen, den diese in der Endverpackung voneinander aufweisen.

5. Verpackungsverfahren nach einem der vorhergehenden Ansprüche,
**dadurch gekennzeichnet,**
**dass** die Unter-Untergruppen **(10)**, insbesondere die, bevorzugt clusterreinen, Gruppen **(20)** von Unter-Untergruppen **(10)**, derart relativ zueinander entlang von den zwei rechtwinklig zueinander orientieren Achsen **(A₁**, **A₂)** verstellt werden, dass die kavitätenrein mit Kunststoffspritzgussteilen **(16)** aus sich entsprechenden Kavitäten **(4)** der C Cluster **(3)** befüllten Unter-Untergruppen **(10)** gleichzeitig, insbesondere in einer ausschließlich axialen, bevorzugt vertikalen, Translationsbewegung, in die zugehörigen kavitätenreinen Untergruppen **(19)** in der Ablageebene **(13)** überführbar sin

6. Verpackungsverfahren nach einem der vorhergehenden Ansprüche,
**dadurch gekennzeichnet,**
**dass** die Unter-Untergruppen **(10),** insbesondere die, besonders bevorzugt clusterreinen, Gruppen **(20)** von Unter-Untergruppen **(10),** derart relativ zueinander entlang von den zwei rechtwinklig zueinander orientieren Achsen **(A₁**, **A₂)** verstellt werden, dass vor der Übergabe in die Ablageebene **(13)** die Abstandsmaße derjenigen Unter-Untergruppen **(10)** zueinander, die kavitätenrein mit Kunststoffspritzgussteilen **(16)** aus sich entsprechenden Kavitäten **(4)** der C Cluster **(3)** befüllt sind, den Abstandsmaßen der diese Unter-Untergruppen **(10)** aufnehmenden Untergruppen **(19)** in der Ablageebene **(13)** entsprechen.

7. Verpackungsverfahren nach einem der vorhergehenden Ansprüche,
**dadurch gekennzeichnet,**
**dass** Transfermittel **(8)** zum Transferrieren der Unter-Untergruppen **(10)** zwei, bevorzugt jeweils verschwenkbare, insbesondere jeweils um 90° verschwenkbare, Verstelleinheiten **(7, 9)** umfassen und jede der Verstelleinheiten **(7, 9)** die Unter-Untergruppen **(10),** insbesondere die Gruppen von clusterreinen Unter-Untergruppen **(10),** entlang einer der beiden senkrecht zueinander verlaufenden Achsen **(A₁**, **A₂)** verstellt, wobei die Unter-Untergruppen **(10),** insbesondere die clusterreinen Unter-Untergruppen **(10),** nach dem Relativverstellen entlang einer der beiden Achsen **(A₁**, **A₂)** von einer ersten Verstelleinheit **(7)** der Verstelleinheiten **(7, 9)** auf eine zweite Verstelleinheit **(9)** der Verstelleinheiten **(7, 9)** überführt werden, oder dass die Relativverstellung der Unter-Untergruppen **(10),** insbesondere der clusterreinen Unter-Untergruppen **(10),** relativ zueinander entlang der zwei senkrecht zueinander orientieren Achsen **(A₁**, **A₂)** mit einer gemeinsamen, insbesondere verschwenkbaren, Verstelleinheit **(7, 9)** erfolgt, bevorzugt gleichzeitig.

8. Verpackungsverfahren nach Anspruch 7,
**dadurch gekennzeichnet,**
**dass** die Bildung der Unter-Untergruppen **(10)** auf den Transfermitteln **(8)**, insbesondere der ersten Verstelleinheit **(7)**, erfolgt und zwar durch mehrfaches, jeweils gleichzeitiges Übergeben der K Kunststoffspritzgussteile **(16)** auf die Transfermittel **(8)**, insbesondere mittels des Entnahmegreifers **(6)**.

9. Verpackungsverfahren nach einem der vorhergehenden Ansprüche,
**dadurch gekennzeichnet,**
**dass** die Unter-Untergruppen **(10)** in die Ablageebene **(13)** überführt, insbesondere dort abgelegt werden mittels einer Verstelleinrichtung, (12), auf der die von dieser getragenen Unter-Untergruppen **(10)** bis auf den Übergabevorgang in die Ablageebene **(3)** ortsfest relativ zueinander angeordnet bleiben.

10. Verpackungsverfahren nach einem der vorhergehenden Ansprüche,
**dadurch gekennzeichnet,**
**dass** zur Überführung, insbesondere Ablage, von K Unter-Untergruppen **(10)** in der Ablageebene **(3)** eine der Anzahl der Kavitäten **(4)** pro Cluster **(3)** entsprechende Anzahl an Ablagepositionen angefahren werden und bei jedem Überführungsvorgang jeweils gleichzeitig diejenigen Unter-Untergruppen **(10)** abgelegt werden, die mit Kunststoffspritzgussteilen **(16)** aus sich entsprechenden Kavitäten **(4)** der C Cluster **(3)** befüllt sind.

11. Verpackungsvorrichtung **(5)** zum Verpacken von als Pipettenspitzen oder medizinische Reaktionsgefäße ausgebildeten Kunststoffspritzgussteilen **(16)** in Endverpackungseinheiten, ausgebildet zur Durchführung eines Verpackungsverfahrens nach einem der vorhergehenden Ansprüche, und zum Zusammenwirken einer benachbart zu der Verpackungsvorrichtung **(5)** anordnenbaren Spritzgussvorrichtung, **(2),** die ausgebildet ist zum Herstellen von Pipettenspitzen oder medizinischen Reaktionsgefäßen umfassend:
- mindestens einen Entnahmegreifer **(6),** der ausgebildet und von Steuermitteln angesteuert ist zum mehrfachen, jeweils gleichzeitigen Entnehmen eines jeweiligen Schusses **(I, II. III)** von K Spritzgussteilen **(16)** aus K Kavitäten **(4)** einer Spritzgussvorrichtung **(2),** bei der die K Kavitäten **(4),** bevorzugt gleichmäßig, auf C Cluster **(3)** verteilt angeordnet sind,
- Untergruppenbildungsmittel, die ausgebildet und von Steuermitteln angesteuert sind zum gleichmäßigen und kavitätenreinen Verteilen der K Kunststoffspritzgussteile **(16)** auf U kavitätenreine Untergruppen **(19)** in einer Ablageebene **(13),** bis jede Untergruppe **(19)** L Kunststoffspritzgussteile **(16)** aufweist, wobei die Anzahl L der Kunststoffspritzgussteile **(16)** einer Untergruppe **(19)** der Anzahl A der in einer Endverpackungseinheit maximal aufnehmbaren Kunststoffspritzgussteilen **(16)** oder einem ganzzahligen Teiler von A entspricht,
- Mittel, insbesondere bestehend aus oder umfassend die Untergruppenbildungsmittel, die ausgebildet sind zum kavitätenreinen und/oder kavitätensortierten Auffüllen der Endverpackungseinheiten mit den Untergruppen **(19),** bis die Endverpackungseinheiten jeweils A Kunststoffspritzgussteile **(16)** aufweisen, wobei die Ablageebene **(13)** entweder unmittelbar von den Endverpackungen oder von einem statischen oder verstellbaren, bevorzugt horizontalen, Zwischenspeicher **(11)** gebildet ist und die Untergruppen **(19)** im letztgenannten Fall aus dem Zwischenspeicher **(11)** in die Endverpackungseinheiten überführbar sind,
**dadurch gekennzeichnet,**
**dass** die Verpackungsvorrichtung **(5)** Unter-Untergruppenbildungsmittel aufweist, die ausgebildet und von Steuermitteln angesteuert sind, um mehrfach und solange hintereinander die K Kunststoffspritzgussteile **(16)** eines jeweiligen Schusses **(I, II, III)** in einer Anordnungsebene **(E)** kavitätenrein und gleichmäßig auf K kavitätenreine Unter-Untergruppen **(10)** derart zu verteilen, bis jede Unter-Untergruppe **(10) jeweils** mehrere, bevorzugt zwischen drei und fünf, Kunststoffspritzgussteile **(16) aus derselben Kavität** aufweist, und dass die Unter-Untergruppenbildungsmittel weiter derart ausgebildet und von den Steuermitteln angesteuert sind, dass die Kunststoffspritzgussteile **(16)** in den Unter-Untergruppen **(10)** jeweils derart , bevorzugt linienförmig, anordnenbar sind, dass ein Abstand unmittelbar benachbarter Kunststoffspritzgussteile **(16)** in der jeweiligen Unter-Untergruppe **(10)** einem Abstand benachbarter Kunststoffspritzgussteile **(16)** in den Endverpackungseinheiten entspricht, und derart, dass mehrfach und solange K Unter-Untergruppen **(10)** gleichmäßig auf die U Untergruppen **(10)** verteilbar sind, bis jede Untergruppe **(19)** die L Kunststoffspritzgussteile **(16)** aufweist, und dass Transfermittel **(8)** vorgesehen sind, die derart ausgebildet sind, dass mit diesen die K Unter-Untergruppen **(10),** insbesondere Gruppen **(20)** von Unter-Untergruppen **(10),** ganz besonders bevorzugt clusterreine Gruppen **(20)** von Unter-Untergruppen **(10),** vor dem Verteilen auf die U Untergruppen **(19)** relativ zueinander entlang von zwei senkrecht zueinander verlaufenden, in der Anordnungsebene **(E)** liegenden Achsen **(A₁**, **A₂)** zueinander, bevorzugt voneinander weg, verstellbar sind.

12. Verpackungsvorrichtung nach Anspruch 11,
**dadurch gekennzeichnet,**
**dass** der Entnahmegreifer **(6)** mehrere, insbesondere zwei, Entnahmegreifereinheiten **(14, 15)** umfasst, wobei die Kunststoffspritzgussteile **(16)** jedes Clusters **(3)**, bevorzugt gleichmäßig, noch weiter bevorzugt entlang einer Clustersymmetrieachse, mittels der Entnahmegreifereinheiten **(14, 15)** aufteilbar sind in jeweils mindestens zwei Teilmengen **(17, 18)** von Kunststoffspritzgussteilen **(16)** pro Cluster **(3),** und dass die Teilmengen **(17, 18)** mittels der Entnahmegreifereinheiten **(14, 15)** durch Relativverstellen der Entnahmegreifereinheiten **(14, 15)** zueinander voneinander weiter beabstandbar sind, insbesondere entlang einer senkrecht zu einer Entnahmeachse verlaufenden Transportachse **(T).**

13. Verpackungsvorrichtung nach Anspruch 12,
**dadurch gekennzeichnet,**
**dass** eine erste Entnahmegreifereinheit **(14)** als relativ zu der mindestens einen anderen zweiten Entnahmegreifeieinheit **(15)** translatorisch verstellbarer Schlitten ausgebildet ist, der zwischen mindestens zwei, bevorzugt drei oder mehr festen Relativpositionen zu der ersten Entnahmegreifereinheit **(14)** verstellbar ist, wobei der Abstand zwischen zwei unmittelbar benachbarten Relativpositionen dem Abstand der zweier benachbarter Ablagepositionen für Kunststoffspritzgussteile **(16)** in einer Unter-Untergruppe **(10)** sowie in der Endverpackungseinheit entspricht.

14. Spritzgusssystem, umfassend eine Spritzgussvorrichtung **(2)** ausgebildet ist zum Herstellen von Pipettenspitzen oder medizinischen Reaktionsgefäßen, bei der K Kavitäten **(4),** bevorzugt gleichmäßig, auf C Cluster **(3)** verteilt angeordnet sind sowie eine Verpackungsvorrichtung **(5)** nach einem der Ansprüche 11 bis 13.

## Claims

1. A packaging method for packaging injection-molded plastic parts **(16)** in final package units, said injection-molded plastic parts **(16)** being pipette tips or medical reaction vessels, said method comprising the steps of:
- simultaneously removing multiple shots **(I, II, III)** of K injection-molded parts **(16)** from K respective cavities **(4),** the K cavities **(4)** being distributed, preferably evenly, over C clusters **(3)**,
- evenly distributing the K injection-molded plastic parts **(16)** in a cavity-pure manner over U cavity-pure subgroups **(19)** in a storing plane **(13)** until each subgroup **(19)** contains L injection-molded plastic parts **(16),** the number L of the injection-molded plastic parts **(16)** of one subgroup **(19)** corresponding to the maximum number A of injection-molded plastic parts **(16)** that can be contained in one final package unit or to an integer divisor of A,
- filling up the final package units with the subgroups **(19)** in a cavity-pure or cavity-sorted manner until the final package units each contain A injection-molded plastic parts **(16),** the storing plane **(13)** being formed either directly by the final packages or by a stationary or displaceable, preferably horizontal, intermediate storage **(11),** and the subgroups **(19)** being moved from the intermediate storage **(11)** into the final package units,
**characterized in that**
the K injection-molded plastic parts **(16)** of a respective shot **(I, II, III)** are distributed in an arrangement plane **(E)** in a cavity-pure manner and evenly over K cavity-pure sub-subgroups **(10)** multiple times and in succession in such a manner until each sub-subgroup **(10)** has several, preferably between three and five, injection-molded plastic parts **(16) from the same cavity** and **in that** the injection-molded plastic parts **(16)** in each sub-subgroup **(10)** are disposed, preferably linearly, in such a manner that a distance of directly adjacent injection-molded plastic parts **(16)** in the respective sub-subgroup **(10)** corresponds to a distance of adjacent injection-molded plastic parts **(16)** in the final package units, and that K sub-subgroups **(10)** are evenly distributed over the U subgroups **(19)** multiple times and until each subgroup **(19)** has the L injection-molded plastic parts **(16),** and **in that** the K sub-subgroups **(10),** in particular groups **(20)** of sub-subgroups **(10),** most preferably cluster-pure groups **(20)** of sub-subgroups **(10),** are displaced relatively to each other along two axes **(A₁**, **A₂),** which run perpendicularly to each other and are located in the arrangement plane **(E),** with respect to each other, preferably away from each other, before they are distributed over the U subgroups **(19).**

2. The packaging method according to claim 1,
**characterized in that**
the relative arrangement of the injection-molded plastic parts **(16)** in the respective sub-subgroups **(10)** remains the same until the final packages are filled and in said final packages.

3. The packaging method according to any one of claims 1 or 2,
**characterized in that**
the K injection-molded plastic parts **(16)** of a respective shot (I, **II, III)** are simultaneously removed by means of several, in particular two, removing gripper units **(14, 15)** of a removing gripper **(6),** the injection-molded plastic parts **(16)** of each cluster **(3)** being divided, preferably evenly, further preferably along a cluster symmetry axis, into at least two partial quantities **(17, 18)** of injection-molded plastic parts **(16)** in each case, each of the partial quantities **(17, 18)** of injection-molded plastic parts **(16)** of a cluster **(3)** being removed by one of the removing gripper units **(14, 15),** and **in that** the partial quantities **(17, 18)** of each cluster **(3)** are spaced further apart from each other by a relative displacement of the removing gripper units **(14, 15),** in particular along a transport axis **(T)** which runs perpendicularly to a removing axis and along which the K injection-molding plastic parts **(16)** are displaced after the removal.

4. The packaging method according to claim 3,
**characterized in that**
the partial quantities **(17, 18)** are spaced apart in such a manner that the injection-molded plastic parts **(16)** of two successive shots **(I, II)** which are to be transferred into the same one of the sub-subgroups **(10)** have the same distance which they have from each other in the final package with respect to each other.

5. The packaging method according to any one of the preceding claims,
**characterized in that**
the sub-subgroups **(10),** in particular the, preferably cluster-pure, groups **(20)** of sub-subgroups **(10),** are displaced in such a manner relative to each other along the two axes **(A₁**, **A₂)** oriented at right angles to each other that the sub-subgroups **(10)** filled with injection-molded plastic parts **(16)** from corresponding cavities **(4)** of C clusters **(3)** in a cavity-pure manner are simultaneously transferrable into the associated cavity-pure subgroups **(19)** in the storing plane **(13),** in particular in an exclusively axial, preferably vertical, translational movement.

6. The packaging method according to any one of the preceding claims,
**characterized in that**
the sub-subgroups **(10),** in particular the, preferably cluster-pure, groups **(20)** of sub-subgroups **(10),** are displaced in such a manner relative to each other along the two axes **(A₁**, **A₂)** oriented at right angles to each other that, before the transfer into the storing plane **(13),** the distance dimensions of those sub-subgroups **(10),** which are filled with injection-molded plastic parts **(16)** from corresponding cavities **(4)** of C clusters **(3)** in a cavity-pure manner, with respect to each other correspond to the distance dimensions of the subgroups **(19)** in the storing plane **(13)** which receive these sub-subgroups **(10).**

7. The packaging method according to any one of the preceding claims,
**characterized in that**
transfer elements **(8)** for transferring the sub-subgroups **(10)** comprise two displacement units **(7, 9),** which are preferably each pivotable, in particular each pivotable by 90°, and each of the displacement units **(7, 9)** displaces the sub-subgroups **(10),** in particular the groups of cluster-pure sub-subgroups **(10),** along one of the two axes **(A₁**, **A₂)** running perpendicularly to each other, the sub-subgroups **(10),** in particular the cluster-pure sub-subgroups **(10),** being transferred from a first displacement unit **(7)** of the displacement units **(7, 9)** to a second displacement unit **(9)** of the displacement units **(7, 9)** after the relative displacement along one of the two axes **(A₁**, **A₂),** or **in that** the relative displacement of the sub-subgroups **(10),** in particular the cluster-pure sub-subgroups **(10),** relative to each other along the two axes **(A₁**, **A₂)** running perpendicularly to each other is carried out by means of a common, in particular pivotable, displacement unit **(7, 9),** preferably simultaneously.

8. The packaging method according to claim 7,
**characterized in that**
the sub-subgroups **(10)** are formed on the transfer elements **(8),** in particular on the first displacement unit **(7),** to wit, by transferring the K injection-molded plastic parts **(16)** multiple times, in each case simultaneously, to the transfer elements **(8),** in particular by means of the removing gripper **(6)**.

9. The packaging method according to any one of the preceding claims,
**characterized in that**
the sub-subgroups **(10)** are transferred into the storing plane **(13),** in particular stored there, by means of a displacement element **(12),** on which the sub-subgroups **(10)** carried by said displacement element **(12)** remain stationary relative to each other except for during the transfer process into the storing plane **(3)**.

10. The packaging method according to any one of the preceding claims,
**characterized in that**
for transferring, in particular storing, K sub-subgroups **(10)** into/in the storing plane **(3)**, a number of storing positions corresponding to the number of cavities **(4)** per cluster **(3)** is approached and, in each transferring process, those sub-subgroups **(10)** that are filled with injection-molded plastic parts **(16)** from corresponding cavities **(4)** of the C clusters **(3)** are stored in each case simultaneously.

11. A packaging device **(5)** for packaging injection-molded plastic parts **(16)** in final package units, said injection-molded plastic parts **(16)** being pipette tips or medical reaction vessels, said packaging device **(5)** being configured to implement a packaging method according to any one of the preceding claims and to interact with an injection molding device **(2)** capable of being disposed adjacent to the packaging device **(5)** and configured to produce pipette tips or medical reaction vessels, said packaging device **(5)** comprising:
- at least one removing gripper **(6)** configured and controlled by control elements to simultaneously remove multiple shots **(I, II, III)** of K injection-molded parts **(16)** from K respective cavities **(4)** of an injection molding device **(2)** in which the K cavities **(4)** are distributed, preferably evenly, over C clusters **(3),**
- subgroup forming elements configured and controlled by control elements to evenly distribute the K injection-molded plastic parts **(16)** in a cavity-pure manner over U cavity-pure subgroups **(19)** in a storing plane **(13)** until each subgroup **(19)** contains L injection-molded plastic parts **(16),** the number L of the injection-molded plastic parts **(16)** of one subgroup **(19)** corresponding to the maximum number A of injection-molded plastic parts **(16)** that can be contained in one final package unit or to an integer divisor of A,
- elements, in particular consisting of or comprising the subgroup forming elements, configured to fill up the final package units with the subgroups **(19)** in a cavity-pure and/or cavity-sorted manner until the final package units each contain A injection-molded plastic parts **(16),** the storing plane **(13)** being formed either directly by the final packages or by a stationary or displaceable, preferably horizontal, intermediate storage **(11),** and, in the latter case, the subgroups **(19)** being movable from the intermediate storage **(11)** into the final package units,
**characterized in that**
the packaging device **(5)** has sub-subgroup forming elements configured and controlled by control elements to distribute the K injection-molded plastic parts **(16)** of a respective shot **(I, II, III)** in an arrangement plane **(E)** in a cavity-pure manner and evenly over K cavity-pure sub-subgroups **(10)** multiple times and in succession in such a manner until each sub-subgroup **(10)** has several, preferably between three and five, injection-molded plastic parts **(16) from the same cavity,** and **in that** the sub-subgroup forming elements are further configured and controlled by control elements in such a manner that the injection-molded plastic parts **(16)** in each sub-subgroup **(10)** are capable of being disposed, preferably linearly, in such a manner that a distance of directly adjacent injection-molded plastic parts **(16)** in the respective sub-subgroup **(10)** corresponds to a distance of adjacent injection-molded plastic parts **(16)** in the final package units, and that K sub-subgroups **(10)** are capable of being evenly distributed over the U subgroups **(10)** multiple times and until each subgroup **(19)** has the L injection-molded plastic parts **(16),** and **in that** transfer elements **(8)** are provided which are configured in such a manner that, with those, the K sub-subgroups **(10),** in particular groups **(20)** of sub-subgroups **(10),** most preferably cluster-pure groups **(20)** of sub-subgroups **(10),** are displaceable relatively to each other along two axes **(A₁**, **A₂),** which run perpendicularly to each other and are located in the arrangement plane **(E),** with respect to each other, preferably away from each other, before they are distributed over the U subgroups **(19).**

12. The packaging device according to claim 11,
**characterized in that**
the removing gripper **(6)** comprises several, in particular two, removing gripper units **(14, 15),** the injection-molded plastic parts **(16)** of each cluster **(3)** being dividable, preferably evenly, further preferably along a cluster symmetry axis, into at least two partial quantities **(17, 18)** of injection-molded plastic parts **(16)** per cluster **(3)** in each case by means of the removing gripper units **(14, 15),** and **in that**, by means of the removing gripper units **(14, 15),** the partial quantities **(17, 18)** are capable of being spaced further apart from each other by a relative displacement of the removing gripper units **(14, 15)** with respect to each other, in particular along a transport axis **(T)** which runs perpendicularly to a removing axis.

13. The packaging device according to claim 12,
**characterized in that**
a first removing gripper unit **(14)** is realized as a slide that is translationally displaceable relative to the at least one other second removing gripper unit **(15),** said slide being displaceable between at least two, preferably three or more, fixed relative positions with respect to the first removing gripper unit **(14),** the distance between two directly adjacent relative positions corresponding to the distance of two adjacent storing positions for injection-molded plastic parts **(16)** in a sub-subgroup **(10)** and in the final package unit.

14. An injection molding system comprising an injection molding device **(2)** which is configured to produce pipette tips or medical reaction vessels and in which K cavities **(4)** are distributed, preferably evenly, over C clusters **(3)**, and a packaging device **(5)** according to any one of claims 11 to 13.

## Revendications

1. Procédé d'emballage de pièces **(16)** en matière plastique moulées par injection dans des unités d'emballage final, lesdites pièces **(16)** en matière plastique moulées par injection étant des pointes de pipettes ou des récipients de réaction médicaux, ledit procédé comprenant les étapes consistant à :
- enlever simultanément plusieurs moulées **(I, II, III)** de K pièces **(16)** moulées par injection de K cavités **(4)** respectives, les K cavités **(4)** étant reparties, de préférence uniformément, sur C clusters **(3)**,
- repartir uniformément les K pièces **(16)** en matière plastique moulées par injection de manière fidèle à la cavité sur U sous-groupes **(19)** fidèles à la cavité dans un plan de dépôt **(13)** jusqu'à ce que chaque sous-groupe **(19)** contienne L pièces **(16)** en matière plastique moulées par injection, le nombre L des pièces **(16)** en matière plastique moulées par injection d'un sous-groupe **(19)** correspondant au nombre A maximal de pièces **(16)** en matière plastique moulées par injection qui peuvent être contenues dans une unité d'emballage final ou à un diviseur entier d'A,
- remplir les unités d'emballage final avec les sous-groupes **(19)** de manière fidèle à la cavité ou triée selon cavité jusqu'à ce que les unités d'emballage final contiennent chacune A pièces **(16)** en matière plastique moulées par injection, le plan de dépôt **(13)** étant formé soit directement par les emballages finals soit par un stockage intermédiaire **(11)** fixe ou déplaçable, de préférence horizontal, et les sous-groupes **(19)** étant transférés du stockage intermédiaire **(11)** dans les unités d'emballage final,
**caractérisé en ce que**
les K pièces **(16)** en matière plastique moulées par injection d'une moulée **(I, II, III)** respective sont reparties dans un plan de disposition **(E)** de manière fidèle à la cavité et uniformément sur K sous-sous-groupes **(10)** fidèles à la cavité plusieurs fois et successivement de telle manière jusqu'à ce que chaque sous-sous-groupe **(10)** ait plusieurs, de préférence entre trois et cinq, pièces **(16)** en matière plastique moulées par injection **de la même** cavité et **en ce que** les pièces **(16)** en matière plastique moulées par injection dans chaque sous-sous-groupe **(10)** sont disposées, de préférence linéairement, de telle manière qu'une distance de pièces **(16)** en matière plastique moulées par injection directement adjacentes dans le sous-sous-groupe **(10)** respectif correspond à une distance de pièces **(16)** en matière plastique moulées par injection adjacentes dans les unités d'emballage final, et que K sous-sous-groupes **(10)** sont repartis uniformément sur les U sous-groupes **(19)** plusieurs fois et jusqu'à ce que chaque sous-groupe **(19)** ait les L pièces **(16)** en matière plastique moulées par injection, et **en ce que** les K sous-sous-groupes **(10),** notamment des groupes **(20)** de sous-sous-groupes **(10),** de manière tout à fait préférée des groupes **(20)** fidèles au cluster de sous-sous-groupes **(10),** sont déplacés les uns relativement aux autres le long de deux axes **(A₁**, **A₂),** qui s'étendent perpendiculairement l'un à l'autre et sont situés dans le plan de disposition **(E),** les uns par rapport aux autres, de préférence en éloignant les uns des autres, avant qu'ils soient répartis sur les U sous-groupes **(19).**

2. Procédé d'emballage selon la revendication 1,
**caractérisé en ce que**
la disposition relative des pièces **(16)** en matière plastique moulées par injection dans les sous-sous-groupes **(10)** respectifs reste la même jusqu'à ce que les emballages finals soient remplis et dans lesdits emballages finals.

3. Procédé d'emballage selon l'une quelconque des revendications 1 ou 2,
**caractérisé en ce que**
les K pièces **(16)** en matière plastique moulées par injection d'une moulée **(I, II, III)** respective sont enlevées simultanément au moyen de plusieurs, notamment deux, unités **(14, 15)** de griffe d'enlèvement d'une griffe d'enlèvement **(6),** les pièces **(16)** en matière plastique moulées par injection de chaque cluster **(3)** étant divisées, de préférence uniformément, plus préférentiellement le long d'un axe de symétrie de cluster, en au moins deux quantités partielles **(17, 18)** de pièces **(16)** en matière plastique moulées par injection, chacune des quantités partielles **(17, 18)** de pièces **(16)** en matière plastique moulées par injection d'un cluster **(3)** étant enlevée par une des unités **(14, 15)** de griffe d'enlèvement, et **en ce que** les quantités partielles **(17, 18)** de chaque cluster **(3)** sont espacées plus loin les unes des autres par un déplacement relatif des unités **(14, 15)** de griffe d'enlèvement, notamment le long d'un axe de transport **(T)** qui s'étend perpendiculairement à un axe d'enlèvement et le long duquel les pièces **(16)** en matière plastique moulées par injection sont déplacées après l'enlèvement.

4. Procédé d'emballage selon la revendication 3,
**caractérisé en ce que**
les quantités partielles **(17, 18)** sont espacées les unes des autres de manière que les pièces **(16)** en matière plastique moulées par injection de deux moulées **(I, II)** successives qui sont à transférer dans le même des sous-sous-groupes **(10)** ont la même distance les unes par rapport aux autres qu'elles ont les unes des autres dans l'emballage final.

5. Procédé d'emballage selon l'une quelconque des revendications précédentes,
**caractérisé en ce que**
les sous-sous-groupes **(10),** notamment les groupes **(20)** de sous-sous-groupes **(10),** qui sont de préférence fidèles au cluster, sont déplacés de telle manière les uns relativement aux autres le long de deux axes **(A₁**, **A₂)** orientés à angle droit l'un par rapport à l'autre que les sous-sous-groupes **(10)** remplis de manière fidèle à la cavité de pièces **(16)** en matière plastique moulées par injection de cavités **(4)** qui se correspondent de C clusters **(3)** sont capables d'être transférés simultanément dans les sous-groupes **(19)** fidèles à la cavité associés dans le plan de dépôt **(13),** notamment dans un mouvement de translation exclusivement axial, de préférence vertical.

6. Procédé d'emballage selon l'une quelconque des revendications précédentes,
**caractérisé en ce que**
les sous-sous-groupes **(10),** notamment les groupes **(20)** de sous-sous-groupes **(10),** qui sont de préférence fidèles au cluster, sont déplacés de telle manière les uns relativement aux autres le long des deux axes **(A₁**, **A₂)** orientés à angle droit l'un par rapport à l'autre qu'avant le transfert dans le plan de dépôt **(13),** les dimensions de distance de ceux sous-sous-groupes **(10),** qui sont remplis de manière fidèle à la cavité de pièces **(16)** en matière plastique moulées par injection de cavités **(4)** qui se correspondent de C clusters **(3)**, les uns par rapport aux autres correspondent aux dimensions de distance des sous-groupes **(19)** dans le plan de dépôt **(13)** qui reçoivent ceux sous-sous-groupes **(10).**

7. Procédé d'emballage selon l'une quelconque des revendications précédentes,
**caractérisé en ce que**
des moyens de transfert **(8)** pour transférer les sous-sous-groupes **(10)** comprennent deux unités de déplacement **(7, 9),** qui sont de préférence chacune capable d'être pivotée, notamment chacune capable d'être pivotée de 90°, et chacune des unités de déplacement **(7, 9)** déplace les sous-sous-groupes **(10),** notamment les groupes de sous-sous-groupes **(10)** fidèles au cluster, le long d'un des deux axes **(A₁**, **A₂)** qui s'étendent perpendiculairement l'un à l'autre, les sous-sous-groupes **(10),** notamment les sous-sous-groupes **(10)** fidèles au cluster, étant transférés d'une première unité de déplacement **(7)** des unités de déplacement **(7, 9)** à une deuxième unité de déplacement **(9)** des unités de déplacement **(7, 9)** après le déplacement relatif le long d'un des deux axes **(A₁**, **A₂),** ou **en ce que** le déplacement relatif des sous-sous-groupes **(10),** notamment des sous-sous-groupes **(10)** fidèles au cluster, les uns par rapport aux autres le long des deux axes **(A₁**, **A₂)** orientés perpendiculairement l'un par rapport à l'autre s'effectue, de préférence simultanément, au moyen d'une unité de déplacement **(7, 9)** commune, qui est notamment capable d'être pivotée.

8. Procédé d'emballage selon la revendication 7,
**caractérisé en ce que**
les sous-sous-groupes **(10)** sont formés sur les moyens de transfert **(8),** notamment sur la première unité de déplacement **(7),** à savoir en transférant les K pièces **(16)** en matière plastique moulées par injection plusieurs fois, toujours simultanément, aux moyens de transfert **(8)**, notamment au moyen de la griffe d'enlèvement **(6)**.

9. Procédé d'emballage selon l'une quelconque des revendications précédentes,
**caractérisé en ce que**
les sous-sous-groupes **(10)** sont transférés dans le plan de dépôt **(13)**, notamment y déposés, au moyen d'un moyen de déplacement **(12)**, sur lequel les sous-sous-groupes **(10)** portés par ledit moyen de déplacement **(12)** restent disposés fixement les uns relativement aux autres, excepté lors du processus de transfert dans le plan de dépôt **(3)**.

10. Procédé d'emballage selon l'une quelconque des revendications précédentes,
**caractérisé en ce que**
pour transférer, notamment déposer, K sous-sous-groupes **(10)** dans le plan de dépôt **(13)**, un nombre de positions de dépôt qui correspond au nombre de cavités **(4)** par cluster **(3)** est approché et, dans chaque processus de transférer, ceux sous-sous-groupes **(10)** remplis de pièces **(16)** en matière plastique moulées par injection de cavités **(4)** qui se correspondent des C clusters **(3)** sont déposés toujours simultanément.

11. Dispositif d'emballage **(5)** de pièces **(16)** en matière plastique moulées par injection dans des unités d'emballage final, lesdites pièces **(16)** en matière plastique moulées par injection étant des pointes de pipettes ou des récipients de réaction médicaux, ledit dispositif d'emballage **(5)** étant configuré pour réaliser un procédé d'emballage selon l'une quelconque des revendications précédentes et pour interagir avec un dispositif **(2)** de moulage par injection capable d'être disposé adjacent au dispositif d'emballage **(5)** et configuré pour produire des pointes de pipettes ou des récipients de réaction médicaux, ledit dispositif d'emballage **(5)** comprenant :
- au moins une griffe d'enlèvement **(6)** configurée et actionnée par des moyens de commande pour enlever simultanément plusieurs moulées **(I, II, III)** de K pièces **(16)** moulées par injection de K cavités **(4)** respectives d'un dispositif **(2)** de moulage par injection dans lequel les K cavités **(4)** sont reparties, de préférence uniformément, sur C clusters **(3)**,
- des moyens de formation de sous-groupes configurés et actionnés par des moyens de commande pour repartir uniformément les K pièces **(16)** en matière plastique moulées par injection de manière fidèle à la cavité sur U sous-groupes **(19)** fidèles à la cavité dans un plan de dépôt **(13)** jusqu'à ce que chaque sous-groupe **(19)** contienne L pièces **(16)** en matière plastique moulées par injection, le nombre L des pièces **(16)** en matière plastique moulées par injection d'un sous-groupe **(19)** correspondant au nombre A maximal de pièces **(16)** en matière plastique moulées par injection qui peuvent être contenues dans une unité d'emballage final ou à un diviseur entier d'A,
- des moyens, notamment consistant en ou comprenant les moyens de formation de sous-groupes, configurés pour remplir les unités d'emballage final avec les sous-groupes **(19)** de manière fidèle à la cavité et/ou triée selon cavité jusqu'à ce que les unités d'emballage final contiennent chacune A pièces **(16)** en matière plastique moulées par injection, le plan de dépôt **(13)** étant formé soit directement par les emballages finals soit par un stockage intermédiaire **(11)** fixe ou déplaçable, de préférence horizontal, et, dans le dernier cas, les sous-groupes **(19)** étant transférables du stockage intermédiaire **(11)** dans les unités d'emballage final,
**caractérisé en ce que**
le dispositif d'emballage **(5)** a des moyens de formation de sous-sous-groupes configurés et actionnés par des moyens de commande pour repartir les K pièces **(16)** en matière plastique moulées par injection d'une moulée **(I, II, III)** respective dans un plan de disposition **(E)** de manière fidèle à la cavité et uniformément sur K sous-sous-groupes **(10)** fidèles à la cavité plusieurs fois et successivement de telle manière jusqu'à ce que chaque sous-sous-groupe **(10)** ait plusieurs, de préférence entre trois et cinq, pièces **(16)** en matière plastique moulées par injection **de la même cavité** et **en ce que** les moyens de formation de sous-sous-groupes sont configurés et actionnés par des moyens de commande de manière que les pièces **(16)** en matière plastique moulées par injection dans chaque sous-sous-groupe **(10)** sont capables d'être disposées, de préférence linéairement, de telle manière qu'une distance de pièces **(16)** en matière plastique moulées par injection directement adjacentes dans le sous-sous-groupe **(10)** respectif correspond à une distance de pièces **(16)** en matière plastique moulées par injection adjacentes dans les unités d'emballage final, et que K sous-sous-groupes **(10)** sont capables d'être repartis uniformément sur les U sous-groupes **(10)** plusieurs fois et jusqu'à ce que chaque sous-groupe **(19)** ait les L pièces **(16)** en matière plastique moulées par injection, et **en ce que** des moyens de transfert **(8)** sont prévus qui sont configurés de manière que, avec ceux-ci, les K sous-sous-groupes **(10)**, notamment des groupes **(20)** de sous-sous-groupes **(10)**, de manière tout à fait préférée des groupes **(20)** fidèles au cluster de sous-sous-groupes **(10)**, sont capables d'être déplacés les uns relativement aux autres le long de deux axes **(A₁**, **A₂)**, qui s'étendent perpendiculairement l'un à l'autre et sont situés dans le plan de disposition **(E)**, les uns par rapport aux autres, de préférence en éloignant les uns des autres, avant qu'ils soient répartis sur les U sous-groupes **(19)**.

12. Dispositif d'emballage selon la revendication 9,
**caractérisé en ce que**
la griffe d'enlèvement **(6)** comprend plusieurs, notamment deux, unités **(14, 15)** de griffe d'enlèvement, les pièces **(16)** en matière plastique moulées par injection de chaque cluster **(3)** étant capables d'être divisées, de préférence uniformément, plus préférentiellement le long d'un axe de symétrie de cluster, en au moins deux quantités partielles **(17, 18)** de pièces **(16)** en matière plastique moulées par injection par cluster **(3)** au moyen des unités **(14, 15)** de griffe d'enlèvement, et **en ce que**, au moyen des unités **(14, 15)** de griffe d'enlèvement, les quantités partielles **(17, 18)** sont espacées plus loin les unes des autres par un déplacement relatif des unités **(14, 15)** de griffe d'enlèvement, notamment le long d'un axe de transport **(T)** qui s'étend perpendiculairement à un axe d'enlèvement.

13. Dispositif d'emballage selon la revendication 12,
**caractérisé en ce**
**qu'**une première unité **(14)** de griffe d'enlèvement est réalisée comme chariot qui est déplaçable de manière translationnelle relativement à l'au moins une autre deuxième unité **(15)** de griffe d'enlèvement, ledit chariot étant déplaçable entre au moins deux, de préférence trois ou plus, positions relatives fixes par rapport à la première unité **(14)** de griffe d'enlèvement, la distance entre deux positions relatives directement adjacentes correspondant à la distance de deux positions de dépôt adjacentes pour des pièces **(16)** en matière plastique moulées par injection dans un sous-sous-groupe **(10)** et dans l'unité d'emballage final.

14. Système de moulage par injection comprenant un dispositif **(2)** de moulage par injection qui est configuré pour produire des pointes de pipettes ou des récipients de réaction médicaux et dans lequel K cavités **(4)** sont reparties, de préférence uniformément, sur C clusters **(3)**, et un dispositif d'emballage **(5)** selon l'une quelconque des revendications 11 à 13.
